# EUROPEAN PATENT SPECIFICATION

(11) **EP 1 628 778 B1**
(45) Date of publication and mention of the grant of the patent: **18.04.2007**
(21) Application number: 04741574.0
(22) Date of filing: 14.05.2004
(51) Int. Cl.: B05D 3/14, B05D 3/08, C07F 9/50, C07F 9/53

(54) **STRONGLY ADHERENT SURFACE COATINGS**
STARK HAFTENDE OBERFLÄCHENBESCHICHTUNGEN
REVETEMENTS DE SURFACE A FORTE ADHERENCE

(30) Priority: 23.05.2003 CH 9282003
(43) Date of publication of application: 01.03.2006
(73) Proprietor: Ciba Specialty Chemicals Holding Inc., 4057 Basel (CH)
(72) Inventor: WOLF, Jean-Pierre, CH-4464 Maisprach (CH); KUNZ, Martin, 79588 Efringen-Kirchen (DE)
(86) International application number: PCT/EP2004/050806
(87) International publication number: WO 2004/103580

(56) References cited:
- WO-A-01/58971
- WO-A-03/064061
- US-A1- 2002 026 049
- US-B1- 6 548 121
- US-B2- 6 399 805

## Description

The invention relates to a process for the production of coatings having good adherence on inorganic or organic substrates, wherein a low-temperature plasma treatment, a corona discharge treatment or a flame treatment is carried out on the inorganic or organic substrate, a specific photoinitiator or a plurality of photoinitiators is applied to the inorganic or organic substrate, and the substrate so precoated with photoinitiator is provided with a further coating. The invention relates also to the use of certain photoinitiators in the production of such layers and to the strongly adherent coatings themselves.

The adhesion properties of coatings (e.g. finishes, paints, printing inks or adhesives) on inorganic or organic substrates, especially on non-polar substrates such as polyethylene, polypropylene or fluorine-containing polyolefins, are frequently inadequate. For that reason additional treatments have to be carried out in order to achieve satisfactory results. The adhesion can be improved by first applying special priming coatings, so-called primers, and only then applying the desired coating thereto.
A further possibility lies in exposing the substrates to be coated to a plasma treatment or corona treatment and then coating them, it being possible for a grafting process with e.g. acrylate monomers to be carried out between those two operations (J. Polym. Sci., Part A: Polym. Chem. 31, 1307-1314 (1993)).
The production of low-temperature plasmas and the plasma-assisted deposition of thin organic or inorganic layers, both under vacuum conditions and under normal pressure, have been known for some time. Fundamental principles and applications are described, for example, by A. T. Bell, "Fundamentals of Plasma Chemistry" in "Technology and Application of Plasma Chemistry", edited by J. R. Holahan and A. T. Bell, Wiley, New York (1974) and H. Suhr, Plasma Chem. Plasma Process 3(1),1, (1983).
Furthermore, in plasmas it is also possible to carry out polymerisations that result in the deposition of polymeric layers and can be used as primers. Fundamental principles and applications are described, for example, by H. Biederman, Y. Osada "Plasma Polymerization Processes" in "Plasma technology 3" edited by L. Holland, Elsevier, Amsterdam 1992.
It is also known that plastics surfaces can be subjected to a plasma treatment and as a result the subsequently applied finish exhibits improved adhesion to the plastics substrate.

This is described by H. J. Jacobasch *et al.* in Farbe + Lack 99(7), 602-607 (1993) for low-temperature plasmas under vacuum conditions and by J. Friedrich *et al.* in Surf. Coat. Technol. 59, 371-6(1993) for plasmas ranging from *in vacuo* up to normal pressure conditions, the low-temperature plasma changing into a corona discharge.
A process similar to the kind mentioned at the beginning is known from WO 00/24527. That process describes the plasma treatment of substrates with immediate vapour-deposition and grafting-on of photoinitiators *in vacuo* for the production of strongly adherent clearcoat layers. Its use is limited to coating using clear, thin varnishes.
WO 01/58971 describes an alternative process in which an electron donor or H donor having an ethylenically unsaturated C=C bond is bonded to a substrate by means of plasma treatment or corona treatment. A strongly adherent coating layer is obtained by adding a suitable coinitiator to the coating being applied.
Some monoacylphosphine oxide (MAPO) photoinitiators having unsaturated C=C double bonds (vinyl benzoyl and vinyl phenyl phosphine) are described by J. H. De Groot *et al.* in Polym. Mater. Sci. 2001, (85), 53.
In WO 99/47185, WO 00/55212 and WO 00/55214 the above-described vinyl MAPOs are used for the preparation of UV-crosslinkable copolymers for contact lens manufacture.

There is a need in the art for processes for the pretreatment of substrates that can readily be carried out in practice and are not too complicated in terms of apparatus by means of which the subsequent coating of those substrates is improved.

It has now been found that coatings of photocurable compositions having especially good adherence can be obtained by applying a certain photoinitiator to a substrate to be coated, after that substrate has been subjected to a plasma treatment (low pressure and/or normal pressure plasmas), corona treatment or flame treatment, and drying and/or irradiating the substrate so treated. The substrates so pretreated are provided with a coating and cured. The resulting coatings exhibit surprisingly good adhesion which does not suffer any appreciable deterioration even after several days' storage or exposure to sunlight.

The invention relates to a process for the production of a strongly adherent coating on an inorganic or organic substrate, wherein
a) a low-temperature plasma treatment, a corona discharge treatment or a flame treatment is carried out on the inorganic or organic substrate,
b) one or more photoinitiators or mixtures of photoinitiators with monomers or/and oligomers, containing at least one ethylenicallly unsaturated group, or solutions, suspensions or emulsions of the afore-mentioned substances, are applied to the inorganic or organic substrate, and optionally
c) using suitable methods those afore-mentioned substances are dried and are irradiated with electromagnetic waves, wherein there is used as photoinitiator at least one compound of formula (I), (II), (III) and/or

   (IV) IN-L-RG (I)

   IN-L-RG₁-L₁-H (II)

   IN-L-RG₁-L₁-IN₁ (III)

   IN-L-RG₁-L₁-RG₂-L₂-IN₁ (IV),

   wherein
   IN and IN₁ are each independently of the others a monacylphosphine, monoacylphosphine oxide or monoacylphosphine sulfide photoinitiator group;
   L, L₁ and L₂ are each independently of the others a single bond or a spacer group;
   RG is a monovalent radical having at least one ethylenically unsaturated C=C bond; and
   RG₁ and RG₂ are each independently of the other a divalent radical having at least one ethylenically unsaturated C=C bond;
   and either
d1) the substrate so precoated with photoinitiator is coated with a composition comprising at least one ethylenically unsaturated monomer or oligomer and the coating is cured by means of UV/VIS radiation or an electron beam; or
d2) the substrate so precoated with photoinitiator is coated with a printing ink and dried; or
d3) a metal, semi-metal, metal oxide or semi-metal oxide is deposited from the gaseous phase onto the substrate so precoated with photoinitiator.

In the process according to the invention it is preferable to use compounds of formulae I and II, especially of formula I.

The monoacylphosphine, monoacylphosphine oxide or monoacylphosphine sulfide photoinitiator group IN or IN₁ has, for example, the following structure 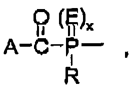 wherein
E is O or S;
x is 0 or 1;
A is 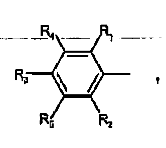 cyclopentyl, cyclohexyl, naphthyl, biphenylyl, anthryl or an O-, S- or N-containing 5- or 6-membered heterocyclic ring, wherein the radicals cyclopentyl, cyclohexyl, naphthyl, biphenylyl, anthryl or the O-, S- or N-containing 5- or 6-membered heterocyclic ring are unsubstituted or substituted by halogen, C₁-C₄alkyl or by C₁-C₄alkoxy;
R₁ and R₂ are each independently of the other C₁-C₂₄alkyl, OR₁₁, CF₃ or halogen;
R₃, R₄ and R₅ are each independently of the others hydrogen, C₁-C₂₄alkyl, OR₁₁ or halogen; or two of the radicals R₁, R₂, R₃, R₄ or R₅ together are C₂-C₁₂alkylene which is uninterrupted or interrupted by one or more O, S or NR₁₄;
R is C₁-C₂₄alkyl unsubstituted or substituted by C₃-C₂₄cycloalkyl, C₃-C₂₄cycloalkenyl, phenyl, CN, C(O)R₁₁, C(O)OR₁₁, C(O)N(R₁₄)₂, OC(O)R₁₁, OC(O)OR₁₁, N(R₁₄)C(O)N(R₁₄). OC(O)NR₁₄, N(R₁₄)C(O)OR₁₁, halogen, OR₁₁, SR₁₁ or by N(R₁₂)(R₁₃); or R is C₂-C₂₄alkyl interrupted one or more times by non-consecutive O or S and unsubstituted or substituted by phenyl, OR₁₁, CN, C(O)R₁₁, C(O)OR₁₁ or by C(O)N(R₁₄)₂;
or R is C₂-C₂₄alkenyl uninterrupted or interrupted one or more times by non-consecutive O and unsubstituted or substituted by OR₁₁ or by C₁-C₁₂alkyl;
or R is C₅-C₂₄cycloalkenyl uninterrupted or interrupted one or more times by non-consecutive O, S or NR₁₄ and unsubstituted or substituted by OR₁₁ or by C₁-C₁₂alkyl;
or R is C₇-C₂₄arylalkyl unsubstituted or substituted at the aryl radical by C₁-C₁₂alkyl or by C₁-C₁₂alkoxy;
or R is C₄-C₂₄cycloalkyl uninterrupted or interrupted one or more times by non-consecutive O, S or NR₁₄ and unsubstituted or substituted by OR₁₁ or by C₁-C₁₂alkyl;
or R is 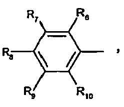 C₈-C₂₄arylcycloalkyl or C₈-C₂₄arylcycloalkenyl;
R₆, R₇, R₈, R₉ and R₁₀ are each independently of the others hydrogen, C₁-C₂₄alkyl unsubstituted or substituted by SR₁₁, N(R₁₂)(R₁₃), OR₁₁ or by phenyl; or R₆, R₇, R₈, R₉ and R₁₀ are C₂-C₂₄alkyl interrupted one or more times by non-consecutive O and unsubstituted or substituted by SR₁₁, N(R₁₂)(R₁₃), OR₁₁ or by phenyl; or R₆, R₇, R₈, R₉ and R₁₀ are SR₁₁, N(R₁₂)(R₁₃), OR₁₁, phenyl or halogen;
R₁₁ is hydrogen, C₁-C₂₀alkyl, C₂-C₂₀alkenyl, C₃-C₈cycloalkyl, benzyl; or R₁₁ is C₂-C₂₀alkyl interrupted one or more times by O, or C₂-C₂₀alkenyl interrupted one or more times by O; or R₁₁ is phenyl unsubstituted or substituted by C₁-C₄alkyl or by C₁-C₄alkoxy;
R₁₂ and R₁₃ are each independently of the other hydrogen, C₁-C₂₀alkyl, C₂-C₂₀alkenyl, C₃-C₈cycloalkyl or benzyl; or R₁₂ and R₁₃ are C₂-C₂₀alkyl interrupted one or more times by O, or C₂-C₂₀alkenyl interrupted one or more times by O; or R₁₂ and R₁₃ are phenyl unsubstituted or substituted by C₁-C₄alkyl or by C₁-C₄alkoxy; or R₁₂ and R₁₃, together with the nitrogen atom to which they are bonded, form a 5- or 6-membered ring uninterrupted or interrupted by O or by NR₁₄;
R₁₄ is hydrogen, C₁-C₁₂alkyl; phenyl unsubstituted or substituted by C₁-C₄alkyl or by C₁-C₄-alkoxy, or benzyl unsubstituted or substituted by C₁-C₄alkyl or by C₁-C₄alkoxy, or R₁₄ is C₂-C₁₂alkyl interrupted one or more times by O.
L, L₁ and L₂ as a spacer group are, for example, a radical -Z-[(A₁)ₐ-Y]_{c}(A₂)_{b}-X]_{d}-, wherein
X, Y and Z are each independently of the others a single bond, -O-, -S-, -N(R₁₆)-, -(CO)-, -(CO)O-, -(CO)N(R₁₆)-, -O-(CO)-, -N(R₁₆)-(CO)- or -N(R₁₆)-(CO)O-;
A₁ and A₂ are each independently of the other C₁-C₁₂alkylene, C₃-C₁₂cycloalkylene, phenylene, phenylene-C₁-C₄alkylene or C₁-C₄alkylene-phenylene-C₁-C₄alkylene;
a, b, c and d are each independently of the others a number 0 to 4; and
R₁₆ is hydrogen, C₁-C₁₂alkyl or phenyl.

The group RG is, for example, a radical -R_{d}C=CRₑRₗ, wherein
RG₁ and RG₂ are each independently of the other -R_{d}C=CRₑ- or 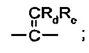 and R_{d}, Rₑ and R_{f} are each independently of the others hydrogen, C₁-C₄alkyl, phenyl, (CO)O-(C₁-C₄alkyl) or C₁-C₄alkylphenyl.

C₁-C₂₄Alkyl is linear or branched and is, for example, C₁-C₂₀-, C₁-C₁₂-, C₁-C₈-, C₁-C₆- or C₁-C₄-alkyl. Examples are methyl, ethyl, propyl, isopropyl, n-butyl, sec-butyl, isobutyl, tert-butyl, pentyl, hexyl, heptyl, 2,4,4-trimethyl-pentyl, 2-ethylhexyl, octyl, nonyl, decyl, undecyl, dodecyl, tetradecyl, pentadecyl, hexadecyl, heptadecyl, octadecyl, nonadecyl and icosyl.
C₂-C₂₄Alkyl interrupted one or more times by non-consecutive O, S or NR₁₄ is linear or branched, preferably linear, and is interrupted, for example, 1-9 times, e.g. 1-7 times or once or twice by O, S or NR₁₄. When the radicals are interrupted by more than one O, the O atoms are separated from one another by at least one methylene group. There are obtained, for example, structural units such as -CH₂-O-CH₃, -CH₂CH₂-O-CH₂CH₃, -[CH₂CH₂O]_{y}-CH₃, wherein y = 1-9, -(CH₂CH₂O)₇CH₂CH₃, -CH₂-CH(CH₃)-O-CH₂-CH₂CH₃, -CH₂-CH(CH₃)-O-CH₂-CH₃, -CH₂SCH₃ or -CH₂-N(CH₃)₂.
C₂-C₂₄Alkenyl radicals may be mono- or poly-unsaturated, and also linear or branched and are, for example, C₂-C₂₀-, C₂-C₈-, C₂C₆-, C₄-C₈-, C₄-C₆-, C₆-C₈- or C₂-C₄-alkenyl. Examples are vinyl, allyl, methallyl, 1,1-dimethylallyl, 1-butenyl, 2-butenyl, 1,3-pentadienyl, 1-hexenyl, 1-octenyl, decenyl and dodecenyl, especially allyl.
Examples of O-, S- or N-containing 5- or 6-membered heterocyclic rings are furyl, thienyl, pyrrolyl, oxinyl, dioxinyl and pyridyl. The mentioned heterocyclic radicals can be mono- or poly-substituted, for example mono- or di-substituted, by linear or branched alkyl, e.g. methyl, ethyl, propyl, butyl, pentyl or hexyl, especially C₁-C₄alkyl. Examples thereof are dimethylpyridyl, dimethylpyrrolyl and methylfuryl.
Substituted phenyl is mono- to penta-substituted, e.g. mono-, di- or tri-substituted, especially mono- or di-substituted on the phenyl ring.
Halogen is fluorine, chlorine, bromine and iodine, especially chlorine and bromine, preferably chlorine.
When two of the radicals R₁, R₂, R₃, R₄ and R₅ together form C₂-C₁₂alkylene uninterrupted or interrupted by one or more O, S or NR₁₄; or when R₁₂ and R₁₃, together with the nitrogen atom to which they are bonded, form a 5- or 6-membered ring uninterrupted or interrupted by O or by NR₁₄, they are, for example, saturated or unsaturated rings, for example cyclopentyl, cyclohexyl, aziridinyl, pyrrolyl, pyrrolidinyl, oxazolyl, thiazolyl, pyridyl, 1,3-diazinyl, 1,2-diazinyl, piperidyl or morpholinyl.
C₃-C₂₄Cycloalkyl is linear or branched alkyl that contains at least one ring or consists solely of one ring, for example cyclopropyl, cyclopentyl, methylcyclopentyl, cyclohexyl, methyl- or dimethyl-cyclohexyl, cyclooctyl or cyclododecyl, especially cyclopentyl and cyclohexyl. C₃-C₈Cycloalkyl is as-defined above up to the appropriate number of carbon atoms. Furthermore, the term cycloalkyl is to be understood as including bridged systems, such as, for example, 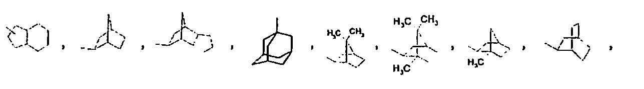 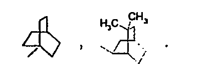 C₄-C₂₄Cydoalkyl uninterrupted or interrupted one or more times by non-consecutive O, S or NR₁₄ is likewise, as described above, linear or branched alkyl that contains at least one ring or consists solely of one ring and is, for example, 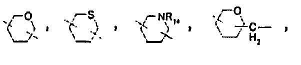 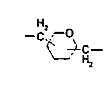 *etc..*

C₃-C₂₄Cycloalkenyl and C₅-C₂₄cycloalkenyl correspond to the meanings given above for cycloalkyl, but the ring in question contains at least one double bond. The term also includes polyunsaturated rings and also bridged rings, e.g. cyclopropenyl, cyclopentenyl, methylcyclopentenyl, cyclohexenyl, methyl- or dimethyl-cyclohexenyl, cyclooctenyl or cyclododecenyl, especially cyclopentenyl and cyclohexenyl.
C₇-C₂₄Arylalkyl is alkyl substituted by an aromatic radical. Examples are phenyl-C₁-C₁₈alkyl, naphthyl-C₁-C₁₆alkyl, anthryl-C₁-C₁₀alkyl, phenanthryl-C₁-C₁₀alkyl, wherein the respective alkyl radical C₁-C₁₈-, C₁-C₁₆-, C₁-C₁₀- is substituted by the respective aromatic radical phenyl, naphthyl, anthryl or phenanthryl. The alkyl radicals are linear or branched and can have the meanings given above. Examples are benzyl, phenylethyl, α-methylbenzyl, phenylpentyl, phenylhexyl and α,α-dimethylbenzyl, especially benzyl, naphthylmethyl, naphthylethyl, naphthylpropyl and naphthyl-1-methylethyl, more especially naphthylmethyl. The alkyl moiety may be in either the 1- or the 2-position of the naphthyl ring.

C₈-C₂₄Arylcycloalkyl is cycloalkyl substituted by an aromatic radical and is, for example, C₉-C₁₆arylcycloalkyl, C₉-C₁₃arylcycloalkyl, e.g. cycloalkyl bonded to one or more rings, for example: 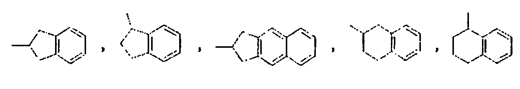 etc..

The term "and/or" is intended to indicate that not only one of the defined alternatives (substituents) may be present but several different defined alternatives (substituents) may be present together, that is to say mixtures of different alternatives (substituents) may be present.
The term "at least one" is intended to define "one or more than one", e.g. one or two or three, preferably one or two.
In the description and in the patent claims, the word "containing" is to be understood as meaning that, unless expressly described to the contrary, a defined subject or a defined group of subjects is included, but without excluding any other substances not explicitly mentioned.
The expression "optionally substituted" includes both possibilities: unsubstituted and substituted.
The expression "optionally interrupted" includes both possibilities: uninterrupted and interrupted.

A is preferably 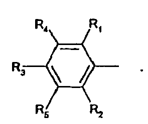 Of special interest are those compounds wherein R₁ and R₂ are C₁-C₄alkyl, especially methyl, or C₁-C₄alkoxy, especially methoxy. A is, for example, 2,4,6-trimethylphenyl or 2,6-dimethoxyphenyl.

Preference is therefore given to compounds of formula I wherein
A is 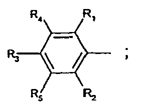
R₁ and R₂ are each independently of the other C₁-C₁₂alkyl, OR₁₁, CF₃ or halogen, especially C₁-C₄alkyl, C₁-C₄alkoxy, CF₃ or Cl;
R₃, R₄ and R₅ are each independently of the others hydrogen, C₁-C₁₂alkyl, OR₁₁ or halogen, especially hydrogen or C₁-C₄alkyl.

The radical R, can be aliphatic or aromatic.

As an aliphatic radical R is preferably
C₁-C₁₂alkyl unsubstituted or substituted by phenyl, CN, OR₁₁, C(O)R₁₁, C(O)OR₁₁ or by C(O)N(R₁₄)₂;
or R is C₂-C₁₂alkyl interrupted one or more times by non-consecutive O and unsubstituted or substituted by phenyl, CN, OR₁₁, C(O)R₁₁, C(O)OR₁₁ or by C(O)N(R₁₄)₂;
or R is C₂-C₁₂alkenyl uninterrupted or interrupted one or more times by non-consecutive O and unsubstituted or substituted additionally by OR₁₁, N(R₁₂)(R₁₃) or by C₁-C₁₂alkyl;
or R is benzyl;
or R is C₄-C₈cycloalkyl uninterrupted or interrupted one or more times by non-consecutive O, S or NR₁₄ and unsubstituted or substituted additionally by OR₁₁, SR₁₁, N(R₁₂)(R₁₃) or by C₁-C₁₂alkyl;
or R is C₈-C₁₂arylcycloalkyl;
R₁₁ is hydrogen, C₁-C₁₂alkyl, C₅-C₆cycloalkyl, phenyl or benzyl;
R₁₂ and R₁₃ are each independently of the other hydrogen, C₁-C₁₂alkyl, phenyl, benzyl, or C₂-C₁₂alkyl interrupted one or more times by non-consecutive O atoms and unsubstituted or substituted by OH or by SH; or R₁₂ and R₁₃, together with the nitrogen atom to which they are bonded, form piperidino, morpholino or piperazino; and
R₁₄ is hydrogen, phenyl, C₁-C₁₂alkyl, or C₂-C₁₂alkyl interrupted one or more times by non-consecutive O atoms and unsubstituted or substituted by OH or by SH.

As an aliphatic radical, R is preferably C₁-C₁₂alkyl.

As an aromatic radical, R is preferably 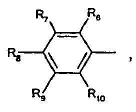 wherein
R₆, R₇, R₈, R₉ and R₁₀ are each independently of the others hydrogen, C₁-C₁₂alkyl, OR₁₁, phenyl or halogen, especially C₁-C₄alkyl; C₁-C₄alkoxy, phenyl or Cl.

Preference is given to compounds of formula I wherein E is O and x is 1.

Further interesting compounds of formula I are those wherein R is phenyl, 2-methylprop-1-yl or 2,4,4-trimethyl-pent-1-yl.

Special mention should be made of compounds of formula I wherein A is 2,6-dimethoxyphenyl or 2,4,6-trimethylphenyl.

Special preference is given to compounds of formula I wherein L is -CH₂-, -CH₂CH₂-O-, -O-CH₂CH₂-O-, -O-CH₂CH₂-O-CH₂-, -O-CH₂-.

Interesting compounds of formula I are those wherein R_{d}, Rₑ and R_{f} are each independently of the others hydrogen, phenyl, (CO)O-(C₁-C₄alkyl), for example especially (CO)OC₂H₅.

The following compounds of formula I are also preferred: 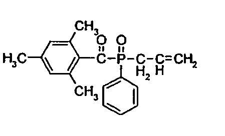 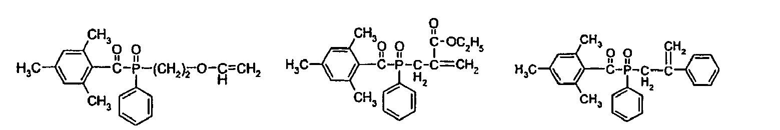 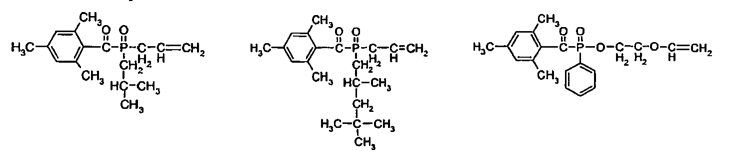 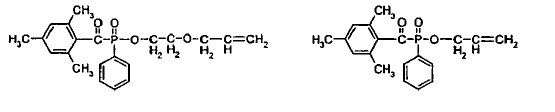 Preparation methods for compounds of formula I are known to the person skilled in the art and are published, for example, in GB 2 360 283 and GB 2 365 430.

The monoacylphosphine oxide (MAPO) photoinitiators of formula (I) having at least one ethylenically unsaturated C=C double bond in the molecule that are used in the process according to the invention are obtained, for example, by reaction of the corresponding metallated phosphine with a corresponding halide and subsequent oxidation: 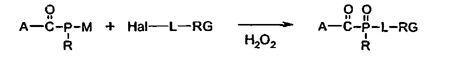 A, R, L and RG are as defined above; Hal is a halogen atom, especially Br, I or Cl; M is an alkali metal, for example Li, Na, K.

The process conditions will be familiar to the person skilled to the art and can be found in the publications mentioned above.

The corresponding metallated starting materials are obtained selectively, for example, by reaction of acyl halides with dimetallated arylphosphines: 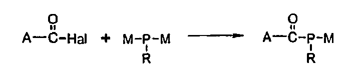 The dimetallated phosphine is obtained by reaction of the corresponding dichloride with the metal. A further possibility lies in reacting the corresponding phosphine with, for example, organolithium compounds, for example butyl lithium. The reactions are described in detail in the publications mentioned above.

A further process for the preparation of MAPO of formula (I) having at least one ethylenically unsaturated C=C double bond in the molecule comprises reacting suitable phosphine intermediates in a Michaelis-Arbuzov reaction with, for example, mesitoyl chloride. 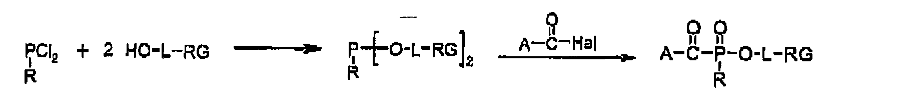 A, R, L and RG are as defined above; Hal is a halogen atom, especially Br, I or Cl.

The preparation of the compounds of formulae (II), (III) and (IV) Is effected analogously using the appropriate starting materials.

Also suitable in the process according to the invention are photoinitiators of the mono- and bis-acylphosphine oxide type, such as published in WO 03/068785.
The invention therefore relates also to a
process for the production of a strongly adherent coating on an inorganic or organic substrate, wherein
a) a low-temperature plasma treatment, a corona discharge treatment or a flame treatment is carried out on the inorganic or organic substrate,
b) one or more photoinitiators or mixtures of photoinitiators with monomers or/and oligomers, containing at least one ethylenically unsaturated group, or solutions, suspensions or emulsions of the afore-mentioned substances, are applied to the inorganic or organic substrate, and optionally
c) using suitable methods those afore-mentioned substances are dried and/or are irradiated with electromagnetic waves,
wherein there is used as photoinitiator at least one compound of formula (XX) and/or (XXI) 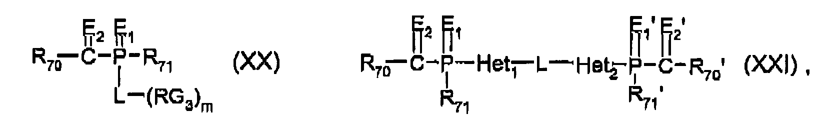 wherein
R₇₀ and R₇₁ are each independently of the other C₁-C₁₈alkyl, C₂-C₁₆alkyl uninterrupted or interrupted by one or more oxygen and/or sulfur atoms and/or by one or more substituted or unsubstituted imino groups, C₂-C₁₈alkenyl, C₆-C₁₂aryl, C₅-C₁₂cycloalkyl or a five- to six-membered heterocycle having oxygen, nitrogen and/or sulfur atoms, wherein the mentioned radicals may each be substituted by aryl, alkyl, aryloxy, alkyloxy, hetero atoms and/or by heterocycles;
R₇₁ may also be C₁-C₁₆alkoxy unsubstituted or substituted by aryl, alkyl, aryloxy, alkyloxy, hetero atoms and/or by heterocycles, or R₇₀-(C=E₂)-;
E₂ is O, S, NR₇₂, N-OR₅ or N-NR₇₂R₇₃;
E₁ is O, S, NR₇₂, N-OR₇₂, N-NR₇₂R₇₃ or a free electron pair;
R₇₂ is hydrogen, C₁-C₄alkyl, SO₃H, phenyl or acetyl;
R₇₃ is hydrogen, C₁-C₄alkyl, COOR₇₂, or C₆-C₁₂aryl or arylsulfonyl unsubstituted or substituted by aryl, alkyl, aryloxy, alkyloxy, hetero atoms and/or by heterocycles;
L is a spacer;
RG₃ is a free-radical-polymerisable or cationically polymerisable group or a group capable of interacting with the polymer being formed;
m is a natural number from 1 to 10;
R₇₀', R₇₁', E₂' and E₁' are as defined for R₇₀, R₇₁, E₂ and E₁ but may be different therefrom; Het₁ and Het₂ are each independently of the other O, S or NR₇₄; and
R₇₄ are, identical or different, hydrogen or C₁-C₄alkyl, for example methyl, ethyl, n-propyl, isopropyl, n-butyl, isobutyl, sec-butyl or tert-butyl.

Of those compounds, those shown in WO 03/068785 in Tables on pages 15 to 25 and 29 to 32, and 33 to 35, pages 42 to 67 and in the Examples and especially the compounds of Table 1, pages 81 to 83, are of special interest in the process according to the invention.

The spacer L has, for example, the meanings given above.
RG₃ is preferably identical to the group RG described above.

The process according to the invention is simple to carry out and allows a high throughput per unit of time, since lengthy application steps and slow crosslinking reactions are not required. The process is especially well suited to workpieces that are composed of different plastics and/or metals or types of glass and that without the pretreatment would therefore exhibit different degrees of adhesion on the different components or that in the case of a conventional primer treatment exhibit different affinities for the primer.

The photoinitiator can be applied, for example, at normal pressure - preferably after a corona treatment in a first process step, or, for example, vapour-deposited *in vacuo,* preferably after a plasma treatment in the first process step.

In the process according to the invention, after the photoinitiator of formula (I), (II) (III) or (IV) or the photoinitiators, or a solution or dispersion thereof in a solvent or monomer, has or have been applied to the substrate which has been plasma-, corona- or flame-pretreated and after any drying step for evaporating off any solvent used, a fixing step for the photoinitiator is carried out by exposure to UV/VIS light. In the context of the present Application, the term "drying" includes both variants, both the removal of the solvent and the fixing of the photoinitiator.

Process step b) in the above-described processes is preferably carried out under normal pressure.
If, in process step b) (in each of the above-described processes), mixtures of photoinitiators with monomers or/and oligomers are used, it is preferred to use mixtures of one or more photoinitiators with monomers,

The invention relates also to a process as described above wherein in addition to the compounds of formula (I), (II), (III) and/or (IV) there are used further photoinitiators (p).

As further photoinitiators (p) that can be applied in addition to the compounds of formula (I), (II), (III) and/or (IV), or in addition to the compounds of formula (XX) and/or (XXI) in process step (b), there are suitable in principle any compounds and mixtures that form one or more free radicals when irradiated with electromagnetic waves. These include initiator systems consisting of a plurality of initiators and systems that function independently of one another or synergistically. In addition to coinitiators, for example amines, thiols, borates, enolates, phosphines, carboxylates and imidazoles, it is also possible to use sensitisers, for example acridines, xanthenes, thiazenes, coumarins, thioxanthones, triazines and dyes. A description of such compounds and initiator systems can be found e.g. in Crivello J.V., Dietliker K.K., (1999): Chemistry & Technology of UV & EB Formulation for Coatings, Inks & Paints, and in Bradley G. (ed.) Vol. 3: Photoinitiators for Free Radical and Cationic Polymerisation 2nd Edition, John Wiley & Son Ltd.
Such compounds and derivatives are derived, for example, from the following classes of compounds: benzoins, benzil ketals, acetophenones, hydroxyalkylphenones, aminoalkylphenones, acylphosphine oxides, acylphosphine sulfides, acyloxyiminoketones, alkylamino-substituted ketones, such as Michler's ketone, peroxy compounds, dinitrile compounds, halogenated acetophenones, phenylglyoxalates, dimeric phenylglyoxalates, benzophenones, oximes and oxime esters, thioxanthones, coumarins, ferrocenes, titanocenes, onium salts, sulfonium salts, iodonium salts, diazonium salts, borates, triazines, bisimidazoles, polysilanes and dyes. It is also possible to use combinations of the compounds from the mentioned classes of compounds with one another and combinations with corresponding coinitiator systems and/or sensitisers.

Especially interesting as additional photoinitiators (p) are compounds of formula V, VI, VII, VIII, IX, X or/and XI 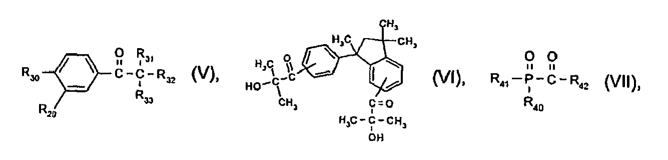 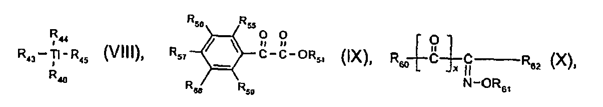 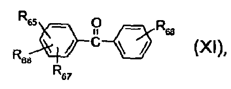 wherein
R₂₉ is hydrogen or C₁-C₁₈alkoxy;
R₃₀ is hydrogen, C₁-C₁₈alkyl, C₁-C₁₈alkoxy, -OCH₂CH₂-OR₄₇, morpholino, SCH₃, or a group 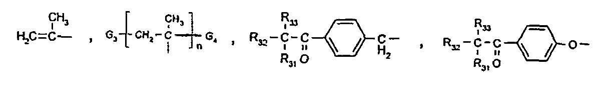 or 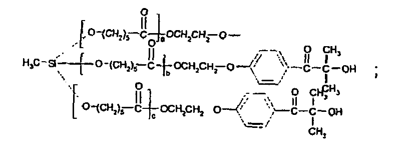
a, b and c are an average of 3;
n is a value of from 2 to 10;
G₃ and G₄ are each independently of the other terminal groups of the polymeric unit, especially hydrogen or CH₃;
R₃₁ is hydroxy, C₁-C₁₆alkoxy, morpholino, dimethylamino or -O(CH₂CH₂O)ₘ-C₁-C₁₆alkyl;
R₃₂ and R₃₃ are each independently of the other hydrogen, C₁-C₆alkyl, C₁-C₁₆alkoxy or -O(CH₂CH₂O)ₘ-C₁-C₁₆alkyl; or R₃₂ and R₃₃ are phenyl or benzyl, those radicals being unsubstituted or substituted by C₁-C₁₂alkyl; or R₃₂ and R₃₃, together with the carbon atom to which they are bonded, form a cyclohexyl ring;
m is a number from 1 to 20;
but R₃₁, R₃₂ and R₃₃ are not all simultaneously C₁-C₁₆alkoxy or -O(CH₂CH₂O)ₘ-C₁-C₁₆alkyl;
R₄₇ is hydrogen, 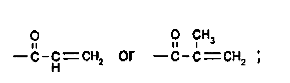
R₃₄, R₃₆, R₃₇ and R₃₈ are each independently of the others hydrogen or methyl;
R₃₅ and R₃₉ are hydrogen, methyl or phenylthio, wherein the phenyl ring of the phenylthio radical is unsubstituted or substituted in the 4-, 2-, 2,4- or 2,4,6-position(s) by C₁-C₄alkyl;
R₄₀ and R₄₁ are each independently of the other C₁-C₂₀alkyl, cyclohexyl, cyclopentyl, phenyl, naphthyl or biphenylyl, those radicals being unsubstituted or substituted by halogen, C₁-C₁₂alkyl, C₁-C₁₂alkoxy, C₁-C₁₂alkylthio or by NR₅₂R₅₃, or R₄₀ and R₄₁ are a S- or N-containing 5- or 6-membered heterocyclic ring or -(CO)R₄₂;
R₄₂ is cyclohexyl, cyclopentyl, phenyl, naphthyl or biphenylyl, those radicals being unsubstituted or substituted by halogen, C₁-C₄alkyl or/and by C₁-C₄alkoxy, or R₄₂ is a S- or N-containing 5- or 6-membered heterocyclic ring;
R₄₃ and R₄₄ are each independently of the other cyclopentadienyl unsubstituted or mono-, di- or tri-substituted by C₁-C₁₈alkyl, C₁-C₁₈alkoxy, cyclopentyl, cyclohexyl or by halogen;
R₄₅ and R₄₆ are each independently of the other phenyl which is substituted by fluorine atoms or CF₃ in at least one of the two positions ortho to the titanium-carbon bond and may contain, as further substituents at the aromatic ring, polyoxaalkyl or pyrrolinyl unsubstituted or substituted by one or two C₁-C₁₂alkyl, di(C₁-C₁₂alkyl)aminomethyl, morpholinomethyl, C₂-C₄alkenyl, methoxymethyl, ethoxymethyl, trimethylsilyl, formyl, methoxy or phenyl substituents,
or R₄₅ and R₄₆ are 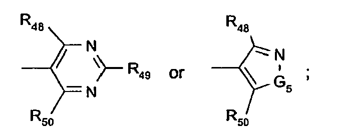
R₄₈, R₄₉ and R₅₀ are each independently of the others hydrogen, halogen, C₂-C₁₂alkenyl, C₁-C₁₂alkoxy, C₂-C₁₂alkoxy interrupted by from one to four O atoms, cyclohexyloxy, cyclopentyloxy, phenoxy, benzyloxy, or phenyl or biphenylyl each unsubstituted or substituted by C₁-C₄alkoxy, halogen, phenylthio or by C₁-C₄alkylthio,
wherein R₄₈ and R₅₀ are not both simultaneously hydrogen and in the radical 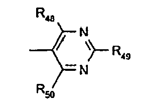 at least one radical R₄₈ or R₅₀ is C₁-C₁₂alkoxy, C₂-C₁₂alkoxy interrupted by from one to four O atoms, cyclohexyloxy, cyclopentyloxy, phenoxy or benzyloxy;
G₅ is O, S or NR₅₁; and
R₅₁, is C₁-C₈alkyl, phenyl or cyclohexyl;
R₅₂ and R₅₃ are each independently of the other hydrogen; C₁-C₁₂alkyl uninterrupted or interrupted by O atoms and unsubstituted or substituted by OH or by SH; or R₅₂ and R₅₃ are C₂-C₁₂alkenyl, cyclopentyl, cyclohexyl, benzyl, phenyl;
R₅₄ is hydrogen, C₁-C₁₂alkyl or a group 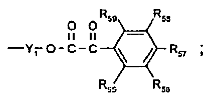
R₅₅, R₅₆, R₅₇, R₅₈ and R₅₉ are each independently of the others hydrogen; C₁-C₁₂alkyl which is unsubstituted or substituted by OH, C₁-C₄alkoxy, phenyl, naphthyl, halogen or by CN and may be interrupted by one or more O atoms; or R₅₅, R₅₆, R₅₇, R₅₈ and R₅₉ are C₁-C₄alkoxy, C₁-C₄alkylthio or NR₅₂R₅₃;
Y₁ is a divalent aliphatic or aromatic radical, especially C₁-C₁₂alkylene;
x is 0 or 1;
R₆₀ is phenyl, naphthyl, or, when x is 0, 9H-carbazol-3-yl, or (9-oxo-9H-thioxanthen-2-yl)-, all those radicals being unsubstituted or substituted by one or more SR₆₃, OR₆₄, NR₅₂R₅₃, halogen, C₁-C₁₂alkyl, phenyl, benzyl, -(CO)-C₁-C₄alkyl, -(CO)-phenyl or -(CO)-phenylene-C₁-C₄alkyl substituents;
R₆₁ is C₄-C₉cycloalkanoyl; C₁-C₁₂alkanoyl unsubstituted or substituted by one or more halogen, phenyl or CN substituents; or R₆₁ is C₄-C₆alkenoyl, with the proviso that the double bond is not conjugated with the carbonyl group; or R₆₁ is benzoyl unsubstituted or substituted by one or more C₁-C₆alkyl, halogen, CN, OR₆₄, SR₆₃ or NR₅₂R₅₃ substituents; or R₆₁ is C₂-C₆alkoxycarbonyl, benzyloxycarbonyl; or phenoxycarbonyl unsubstituted or substituted by one or more C₁-C₆alkyl or halogen substituents;
R₆₂ is hydrogen, phenyl or benzoyl, the radicals phenyl and benzoyl being unsubstituted or substituted by C₁-C₆alkyl, phenyl, halogen, OR₆₄, SR₆₃ or by NR₅₂R₅₃; or R₆₂ is C₁-C₂₀alkyl or C₂-C₁₂alkoxycarbonyl, the radicals C₁-C₂₀alkyl and C₂-C₁₂alkoxycarbonyl being unsubstituted or substituted by OH and uninterrupted or interrupted by one or more O atoms; or R₆₂ is C₂-C₂₀alkanoyl, benzyl, benzyl-(CO)-, C₁-C₆alkyl-SO₂- or phenyl-SO₂-;
R₆₃ and R₆₄ are each independently of the other hydrogen or C₁-C₁₂alkyl unsubstituted or substituted by OH, SH, CN, phenyl, (CO)O-C₁-C₄alkyl, O(CO)-C₁-C₄alkyl, COOH, O(CO)-phenyl, and such unsubstituted or substituted C₁-C₁₂alkyl may be interrupted by one or more O atoms; or R₆₃ and R₆₄ are cyclohexyl, or phenyl unsubstituted or substituted by C₁-C₁₂alkyl, C₁-C₁₂alkoxy or by halogen, or phenyl-C₁-C₃alkyl;
R_{65,} R₆₆ and R₆₇ are each independently of the others hydrogen, C₁-C₄alkyl, C₁-C₄haloalkyl, C₁-C₄alkoxy, chlorine or N(C₁-C₄alkyl)₂;
R₆₈ is hydrogen, C₁-C₄alkyl, C₁-C₄haloalkyl, phenyl, N(C₁-C₄alkyl)₂, COOCH₃, 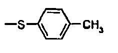 or 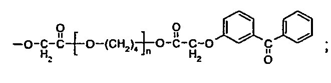 or R₆₈ and R₆₇ together are -S-.
C₁-C₂₀Alkyl has the meanings given above up to the appropriate number of carbon atoms. C₁-C₁₈Alkoxy is, for example, branched or unbranched alkoxy, e.g. methoxy, ethoxy, n-propoxy, isopropoxy, n-butoxy, isobutoxy, sec-butoxy, tert-butoxy, pentyloxy, hexyloxy, heptyloxy, octyloxy, 2,4,4-trimethyl-pent-1-yloxy, 2-ethylhexyloxy, nonyloxy, decyloxy, dodecyloxy or octadecyloxy. C₁-C₁₆-, C₁-C₁₂- and C₁-C₄-alkoxy have the meanings given above up to the respective number of carbon atoms.
C₁-C₁₂Alkylthio is linear or branched and is, for example, C₁-C₈-, C₁-C₆- or C₁-C₄-alkylthio, for example methylthio, ethylthio, n-propylthio, isopropylthio, n-butylthio, isobutylthio, sec-butylthio or tert-butylthio, preferably methylthio.
Substituted phenyl is, for example, mono- to penta-substituted, for example mono-, di- or tri-substituted, on the phenyl ring.
When R₄₀, R₄₁ and R₄₂ are a S- or N-containing 5- or 6-membered heterocyclic ring, they are, for example, thienyl, pyrrolyl or pyridyl.
C₂-C₁₂Alkenyl is linear or branched, can be mono- or poly-unsaturated and is, for example, allyl, methallyl, 1,1-dimethylallyl, 1-butenyl, 2-butenyl, 1,3-pentadienyl, 1-hexenyl or 1-octenyl, especially allyl. C₂-C₄Alkenyl is, for example, allyl, methallyl, 1-butenyl or 2-butenyl.
Halogen is fluorine, chlorine, bromine and iodine, preferably fluorine, chlorine and bromine.

The term polyoxaalkyl includes C₂-C₂₀alkyl interrupted by from 1 to 9 O atoms and denotes, for example, structural units such as CH₃-O-CH₂-, CH₃CH₂-O-CH₂CH₂-, CH₃O[CH₂CH₂O]_{z}- , wherein z = 1-9, -(CH₂CH₂O)₇CH₂CH₃, -CH₂-CH(CH₃)-O-CH₂-CH₂CH₃.

A divalent aliphatic or aromatic radical Y₁ is, for example, C₁-C₂₀alkylene, linear or branched, uninterrupted or interrupted by one or more O atoms and unsubstituted or substituted by OH; or cycloalkylene, e.g. cyclohexylene, the term cycloalkylene also including radicals such as, for example, -CH₂-cyclohexylene-CH₂-. A corresponding aromatic radical is, for example, phenylene, naphthylene, biphenylene, all unsubstituted or substituted, and all optionally additionally substituted at the bonds by alkylene in a manner analogous to that described for cycloalkylene.

R₆₀ as substituted 9H-carbazol-3-yl is preferably substituted by C₁-C₁₂alkyl, and -(CO)-phenyl or -(CO)-phenylene-C₁-C₄alkyl, substitution being possible at one of the aromatic rings and at the N atom. R₆₀ is in this case especially a radical of formula 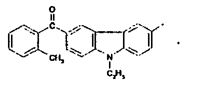 A preferred compound of formula X wherein R₆₀ is substituted 9H-carbazol-3-yl is 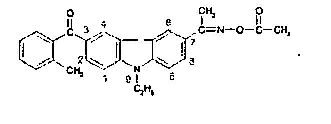 When R₆₈ and R₆₇ together are -S-, the following structure 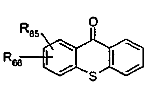 wherein R₆₅ and R₆₆ are as defined is obtained.

In the compounds of formulae V; VI; VII; VIII; IX, X and XI, preferably R₃₀ is hydrogen, -OCH₂CH₂-OR₄₇, morpholino, SCH₃, a group 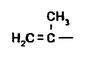 or a group 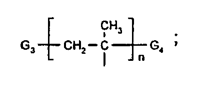 R₃₁ is hydroxy, C₁-C₁₆alkoxy, morpholino or dimethylamino;
R₃₂ and R₃₃ are each independently of the other C₁-C₄alkyl, phenyl, benzyl or C₁-C₁₆alkoxy, or R₃₂ and R₃₃, together with the carbon atom to which they are bonded, form a cyclohexyl ring;
R₄₇ is hydrogen or 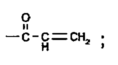 R₃₄, R₃₅ and R₃₆ and R₃₇, R₃₈ and R₃₉ are hydrogen or C₁-C₄alkyl;
R₄₀ is C₁-C₁₂alkyl, unsubstituted phenyl, or phenyl substituted by C₁-C₁₂alkyl or/and by C₁-C₁₂alkoxy;
R₄₁ is (CO)R₄₂; and
R₄₂ is phenyl substituted by C₁-C₄alkyl or/and by C₁-C₄alkoxy;
R₅₅, R₅₆, R₅₇, R₅₈ and R₅₉ are hydrogen;
R₅₄ is the group 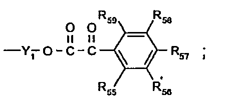 Y₁ is -CH₂CH₂-O-CH₂CH₂-;
x is 1;
R₆₀ is phenyl substituted by SR₆₃ or 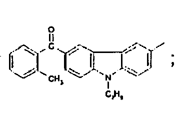 R₆₁ is benzoyl;
R₆₂ is hexyl; and
R₆₃ is phenyl.

Preferred compounds of formulae V, VI, VII, VIII, IX, X and XI are α-hydroxycyclohexylphenyl-ketone or 2-hydroxy-2-methyl-1-phenyl-propanone, (4-methylthiobenzoyl)-1-methyl-1-morpholino-ethane, (4-morpholino-benzoyl)-1-benzyl-1-dimethylamino-propane, (4-morpholino-benzoyl)-1-(4-methylbenzyl)-1-dimethylamino-propane, (3,4-dimethoxy-benzoyl)-1-benzyl-1-dimethylamino-propane, benzil dimethyl ketal, (2,4,6-trimethylbenzoyl)-diphenylphosphine oxide, bis(2,6-dimethoxybenzoyl)-(2,4,4-trimethyl-pent-1-yl)phosphine oxide, bis(2,4,6-trimethylbenzoyl)-phenyl-phosphine oxide or bis(2,4,6-trimethylbenzoyl)-(2,4-dipentyloxyphenyl)phosphine oxide, 5,5'-oxodi(ethyleneoxydicarbonylphenyl) and dicyclopentadienyl-bis(2,6-difluoro-3-pyrrolo)titanium, and also benzophenone, 4-phenylbenzophenone, 3-methyl-4'-phenylbenzophenone, 4-methoxybenzophenone, 4,4'-dimethoxybenzophenone, 4,4'-dimethylbenzophenone, 4,4'-dichlorobenzophenone, 4,4'-dimethylaminobenzophenone, 4,4'-diethylaminobenzophenone, 4-methylbenzophenone, 2,4,6-trimethylbenzophenone, 2,4,6-trimethyl-4'-phenylbenzophenone, 4-(4-methylthiophenyl)-benzophenone, 3,3'-dimethyl-4-methoxybenzophenone, methyl 2-benzoylbenzoate, 4-(2-hydroxyethylthio)-benzophenone, 4-(4-tolylthio)benzophenone, 4-benzoyl-N,N,N-trimethylbenzenemethanaminium chloride, 2-hydroxy-3-(4-benzoylphenoxy)-N,N,N-trimethyl-1-propanaminium chloride monohydrate, 4-(13-acryloyl-1,4,7,10,13-pentaoxatridecyl)-benzophenone, 4-benzoyl-N,N-dimethyl-N-[2-(1-oxo-2-propenyl)oxy]ethyl-benzenemethanaminium chloride; 2,2-dichloro-1-(4-phenoxyphenyl)-ethanone, 4,4'-bis(chloromethyl)-benzophenone, 4-methylbenzophenone, 2-methylbenzophenone, 3-methylbenzophenone, 4-chlorobenzophenone, 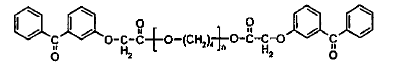 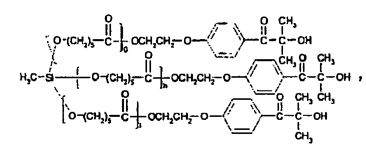 wherein g, h and i are an average of 3 (SiMFPI2); and also 2-chlorothioxanthone, 2,4-diethylthioxanthone, 2-isopropylthioxanthone, 3-isopropylthioxanthone, 1-chloro-4-propoxythioxanthone.

Preference is given to compounds as additional photoinitiators (p) wherein in formula V R₃₂ and R₃₃ are each independently of the other C₁-C₆alkyl or, together with the carbon atom to which they are bonded, form a cyclohexyl ring and R₃₁ is hydroxy.

When mixtures of compounds of formula I, II, III and/or IV with compounds of formula V, VI, VII, VIII, IX, X and/or XI are used, the proportion of compounds of formula I, II, III and/or IV in admixture with compounds of formula V, VI, VII, VIII, IX, X and/or XI is from 5 to 99 %, e.g. 20-80 %, preferably 25 to 75 %.

Preferred are mixtures comprising compounds of formula I and compounds of formula VII
wherein
R₄₀ is phenyl unsubstituted or substituted by from one to three C₁-C₁₂alkyl or/and C₁-C₁₂alkoxy substituents, or C₁-C₁₂alkyl;
R₄₁ is the group (CO)R₄₂ or phenyl; and
R₄₂ is phenyl substituted by from one to three C₁-C₄alkyl or C₁-C₄alkoxy substituents.

The preparation of the compounds of formulae V, VI, VII, VIII, IX, X and XI is generally known to the person skilled in the art and some of the compounds are commercially available. The preparation of oligomeric compounds of formula V is described, for example, in EP 161 463. A description of the preparation of compounds of formula VI can be found, for example, in EP 209 831. The preparation of compounds of formula VII is disclosed, for example, in EP 7508, EP 184 095 and GB 2 259 704. The preparation of compounds of formula VIII is described, for example, in EP 318 894, EP 318 893 and EP 565 488. Compounds of formula IX are known from US 6 048 660 and compounds of formula X are known from GB 2 339 571 or WO 02/100903. Compounds of formula XI can be obtained, for example, analogously to the methods described for the compounds according to the invention. Some compounds of formula XI are also commercially obtainable.

Possible ways of obtaining plasmas under vacuum conditions have been described frequently in the literature. The electrical energy can be coupled in by inductive or capacitive means. It may be direct current or alternating current; the frequency of the alternating current may range from a few kHz up into the MHz range. A power supply in the microwave range (GHz) is also possible.
The principles of plasma production and maintenance are described, for example, in the review articles by A. T. Bell and H. Suhr mentioned above.

As primary plasma gases it is possible to use, for example, He, argon, xenon, N₂, O₂, H₂, steam or air, and also mixtures of those compounds.

The process according to the invention is not sensitive *per se* in respect of the coupling-in of the electrical energy.

The process can be carried out batchwise, for example in a rotating drum, or continuously in the case of films, fibres or woven fabrics. Such methods are known and are described in the prior art.

The process can also be carried out under corona discharge conditions. Corona discharges are produced under normal pressure conditions, the ionised gas most frequently used being air. In principle, however, other gases and mixtures are also possible, as described, for example, in COATING Vol. 2001, No. 12, 426, (2001). The advantage of air as ionisation gas in corona discharges is that the operation can be carried out in an apparatus open to the outside and, for example, a film can be drawn through continuously between the discharge electrodes. Such process arrangements are known and are described, for example, in J. Adhesion Sci. Technol. Vol 7, No. 10, 1105, (1993). Three-dimensional workpieces can be treated with a free plasma jet, the contours being followed with the assistance of robots.

In the process according to the invention in process step a), the treatment with a corona discharge is preferred.

The flame treatment of substrates is known to the person skilled in the art. Corresponding industrial apparatus, for example for the flame treatment of films, is commercially available. In such a treatment, a film is conveyed on a cooled cylindrical roller past the flame-treatment apparatus, which consists of a chain of burners arranged in parallel, usually along the entire length of the cylindrical roller. Details can be found in the brochures of the manufacturers of flame-treatment apparatus (e.g. esse Cl, flame treaters, Italy). The parameters to be chosen are governed by the particular substrate to be treated. For example, the flame temperatures, the flame intensity, the dwell times, the distance between substrate and burner, the nature of the combustion gas, air pressure, humidity, are matched to the substrate in question. As flame gases it is possible to use, for example, methane, propane, butane or a mixture of 70 % butane and 30 % propane.

The inorganic or organic substrate to be treated can be in any solid form. The substrate is preferably in the form of a woven fabric, a fibre, a film or a three-dimensional workpiece. The substrate may be, for example, a thermoplastic, elastomeric, inherently crosslinked or crosslinked polymer, a metal oxide, a ceramic material, glass, metal, leather or textile.

The pretreatment of the substrate in the form of plasma-, corona- or flame-treatment can be carried out, for example, immediately after the extrusion of a fibre or film, and also directly after film-drawing.

The inorganic or organic substrate is preferably a thermoplastic, elastomeric, inherently crosslinked or crosslinked polymer, a metal oxide, a ceramic material, a glass or a metal, especially a thermoplastic, elastomeric, inherently crosslinked or crosslinked polymer.

Examples of thermoplastic, elastomeric, inherently crosslinked or crosslinked polymers are listed below.
1. Polymers of mono- and di-olefins, for example polypropylene, polyisobutylene, polybutene-1, poly-4-methylpentene-1, polyisoprene or polybutadiene and also polymerisation products of cyclo-olefins, for example of cyclopentene or norbornene; and also polyethylene (which may optionally be crosslinked), for example high density polyethylene (HDPE), high density polyethylene of high molecular weight (HDPE-HMW), high density polyethylene of ultra-high molecular weight (HDPE-UHMW), medium density polyethylene (MDPE), low density polyethylene (LDPE), and linear low density polyethylene (LLDPE), (VLDPE) and (ULDPE).
   Polyolefins, that is to say polymers of mono-olefins, as mentioned by way of example in the preceding paragraph, especially polyethylene and polypropylene, can be prepared by various processes, especially by the following methods:
   a) by free-radical polymerisation (usually at high pressure and high temperature);
   b) by means of a catalyst, the catalyst usually containing one or more metals of group IVb, Vb, VIb or VIII. Those metals generally have one or more ligands, such as oxides, halides, alcoholates, esters, ethers, amines, alkyls, alkenyls and/or aryls, which may be either π- or σ-coordinated. Such metal complexes may be free or fixed to carriers, for example to activated magnesium chloride, titanium(III) chloride, aluminium oxide or silicon oxide. Such catalysts may be soluble or insoluble in the polymerisation medium. The catalysts can be active as such in the polymerisation or further activators may be used, for example metal alkyls, metal hydrides, metal alkyl halides, metal alkyl oxides or metal alkyl oxanes, the metals being elements of group(s) Ia, IIa and/or IIIa. The activators may have been modified, for example, with further ester, ether, amine or silyl ether groups. Such catalyst systems are usually referred to as Phillips, Standard Oil Indiana, Ziegler (-Natta), TNZ (DuPont), metallocene or Single Site Catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of mono- and di-olefins with one another or with other vinyl monomers, for example ethylene/propylene copolymers, linear low density polyethylene (LLDPE) and mixtures thereof with low density polyethylene (LDPE), propylene/butene-1 copolymers, propylene/isobutylene copolymers, ethylene/butene-1 copolymers, ethylene/hexene copolymers, ethylene/methylpentene copolymers, ethylene/heptene copolymers, ethylene/octene copolymers, propylene/butadiene copolymers, isobutylene/isoprene copolymers, ethylene/alkyl acrylate copolymers, ethylene/alkyl methacrylate copolymers, ethylene/vinyl acetate copolymers and copolymers thereof with carbon monoxide, or ethylene/acrylic acid copolymers and salts thereof (ionomers), and also terpolymers of ethylene with propylene and a diene, such as hexadiene, dicyclopentadiene or ethylidenenorbornene; and also mixtures of such copolymers with one another or with polymers mentioned under 1), for example polypropylene-ethylene/propylene copolymers, LDPE-ethylene/vinyl acetate copolymers, LDPE-ethylene/acrylic acid copolymers, LLDPE-ethylene/vinyl acetate copolymers, LLDPE-ethylene/acrylic acid copolymers and alternately or randomly structured polyalkylene-carbon monoxide copolymers and mixtures thereof with other polymers, for example polyamides.
4. Hydrocarbon resins (for example C₅-C₉) including hydrogenated modifications thereof (for example tackifier resins) and mixtures of polyalkylenes and starch.
5. Polystyrene, poly(p-methylstyrene), poly(α-methylstyrene).
6. Copolymers of styrene or α-methylstyrene with dienes or acrylic derivatives, for example styrene/butadiene, styrene/acrylonitrile, styrene/alkyl methacrylate, styrene/butadiene/alkyl acrylate and methacrylate, styrene/maleic anhydride, styrene/acrylonitrile/methyl acrylate; high-impact-strength mixtures consisting of styrene copolymers and another polymer, for example a polyacrylate, a diene polymer or an ethylene/propylene/diene terpolymer; and also block copolymers of styrene, for example styrene/butadiene/styrene, styrene/isoprene/styrene, styrene/ethylene-butylene/styrene or styrene/ethylene-propylene/styrene.
7. Graft copolymers of styrene or α-methylstyrene, for example styrene on polybutadiene, styrene on polybutadiene/styrene or polybutadiene/acrylonitrile copolymers, styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleic acid imide on polybutadiene; styrene and maleic acid imide on polybutadiene, styrene and alkyl acrylates or alkyl methacrylates on polybutadiene, styrene and acrylonitrile on ethylene/propylene/diene terpolymers, styrene and acrylonitrile on polyalkyl acrylates or polyalkyl methacrylates, styrene and acrylonitrile on acrylate/butadiene copolymers, and mixtures thereof with the copolymers mentioned under 6), such as those known, for example, as so-called ABS, MBS, ASA or AES polymers.
8. Halogen-containing polymers, for example polychloroprene, chlorinated rubber, chlorinated and brominated copolymer of isobutylene/isoprene (halobutyl rubber), chlorinated or chlorosulfonated polyethylene, copolymers of ethylene and chlorinated ethylene, epichlorohydrin homo- and co-polymers, especially polymers of halogen-containing vinyl compounds, for example polyvinyl chloride, polyvinylidene chloride, polyvinyl fluoride, polyvinylidene fluoride; and copolymers thereof, such as vinyl chloride/vinylidene chloride, vinyl chloride/vinyl acetate or vinylidene chloride/vinyl acetate.
9. Polymers derived from α,β-unsaturated acids and derivatives thereof, such as polyacrylates and polymethacrylates, or polymethyl methacrylates, polyacrylamides and polyacrylonitriles impact-resistant-modified with butyl acrylate.
10. Copolymers of the monomers mentioned under 9) with one another or with other unsaturated monomers, for example acrylonitrile/butadiene copolymers, acrylonitrile/alkyl acrylate copolymers, acrylonitrile/alkoxyalkyl acrylate copolymers, acrylonitrile/vinyl halide copolymers or acrylonitrile/alkyl methacrylate/butadiene terpolymers.
11. Polymers derived from unsaturated alcohols and amines or their acyl derivatives or acetals, such as polyvinyl alcohol, polyvinyl acetate, stearate, benzoate or maleate, polyvinylbutyral, polyallyl phthalate, polyallylmelamine; and the copolymers thereof with olefins mentioned in Point 1.
12. Homo- and co-polymers of cyclic ethers, such as polyalkylene glycols, polyethylene oxide, polypropylene oxide or copolymers thereof with bisglycidyl ethers.
13. Polyacetals, such as polyoxymethylene, and also those polyoxymethylenes which contain comonomers, for example ethylene oxide; polyacetals modified with thermoplastic polyurethanes, acrylates or MBS.
14. Polyphenylene oxides and sulfides and mixtures thereof with styrene polymers or polyamides.
15. Polyurethanes derived from polyethers, polyesters and polybutadienes having terminal hydroxyl groups on the one hand and aliphatic or aromatic polyisocyanates on the other hand, and their initial products.
16. Polyamides and copolyamides derived from diamines and dicarboxylic acids and/or from aminocarboxylic acids or the corresponding lactams, such as polyamide 4, polyamide 6, polyamide 6/6, 6/10, 6/9, 6/12, 4/6, 12/12, polyamide 11, polyamide 12, aromatic polyamides derived from m-xylene, diamine and adipic acid; polyamides prepared from hexamethylenediamine and iso- and/or tere-phthalic acid and optionally an elastomer as modifier, for example poly-2,4,4-trimethylhexamethylene terephthalamide or poly-m-phenylene isophthalamide. Block copolymers of the above-mentioned polyamides with polyolefins, olefin copolymers, ionomers or chemically bonded or grafted elastomers; or with polyethers, for example with polyethylene glycol, polypropylene glycol or polytetramethylene glycol. Also polyamides or copolyamides modified with EPDM or ABS; and polyamides condensed during processing ("RIM polyamide systems").
17. Polyureas, polyimides, polyamide imides, polyether imides, polyester imides, polyhydantoins and polybenzimidazoles.
18. Polyesters derived from dicarboxylic acids and dialcohols and/or from hydroxycarboxylic acids or the corresponding lactones, such as polyethylene terephthalate, polybutylene terephthalate, poly-1,4-dimethylolcyclohexane terephthalate, polyhydroxybenzoates, and also block polyether esters derived from polyethers with hydroxyl terminal groups; and also polyesters modified with polycarbonates or MBS.
19. Polycarbonates and polyester carbonates.
20. Polysulfones, polyether sulfones and polyether ketones.
21. Crosslinked polymers derived from aldehydes on the one hand and phenols, urea or melamine on the other hand, such as phenol-formaldehyde, urea-formaldehyde and melamine-formaldehyde resins.
22. Drying and non-drying alkyd resins.
23. Unsaturated polyester resins derived from copolyesters of saturated and unsaturated dicarboxylic acids with polyhydric alcohols, and also vinyl compounds as crosslinking agents, and also the halogen-containing, difficultly combustible modifications thereof.
24. Crosslinkable acrylic resins derived from substituted acrylic esters, e.g. from epoxy acrylates, urethane acrylates or polyester acrylates.
25. Alkyd resins, polyester resins and acrylate resins that are crosslinked with melamine resins, urea resins, isocyanates, isocyanurates, polyisocyanates or epoxy resins.
26. Crosslinked epoxy resins derived from aliphatic, cycloaliphatic, heterocyclic or aromatic glycidyl compounds, e.g. products of bisphenol A diglycidyl ethers, bisphenol F diglycidyl ethers, that are crosslinked using customary hardeners, e.g. anhydrides or amines with or without accelerators.
27. Natural polymers, such as cellulose, natural rubber, gelatin, or polymer-homologously chemically modified derivatives thereof, such as cellulose acetates, propionates and butyrates, and the cellulose ethers, such as methyl cellulose; and also colophonium resins and derivatives.
28. Mixtures (polyblends) of the afore-mentioned polymers, for example PP/EPDM, polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO, PBT/PC/ABS or PBT/PET/PC.

The substrate can be, for example, a substrate as used in the field of commercial printing, for sheet-fed intaglio printing, sheetfed gravure printing, sheetfed offset printing or endless printing, posters, calendars, forms, labels, packaging films, tapes, credit cards, furniture profiles etc..

The substrate is not confined to use in the non-nutrition sector. The substrate may also be, for example, a material for use in the field of nutrition, e.g. as packaging for foodstuffs, cosmetics, medicaments, etc..

Where substrates have been pretreated according to processes of the invention it is also possible, for example, for substrates that usually have poor compatibility with one another to be adhesively bonded to one another or laminated.

Within the context of the present invention, paper should also be understood as being an inherently crosslinked polymer, especially in the form of card(board), which can additionally be coated with e.g. Teflon®. Such substrates are, for example, commercially available.

The thermoplastic, crosslinked or inherently crosslinked plastics is preferably a polyolefin, polyamide, polyacrylate, polycarbonate, polystyrene or an acrylic/melamine, alkyd or polyurethane coating.

Polycarbonate, polyethylene and polypropylene are especially preferred.

The plastics may be, for example, in the form of films, injection-moulded articles, extruded workpieces, fibres, felts or woven fabrics.

As inorganic substrates there come into consideration especially glass, ceramic materials, metal oxides and metals. They may be silicates and semi-metal or metal oxide glasses which are preferably in the form of layers or in the form of powders preferably having average particle diameters of from 10 nm to 2000 µm. The particles may be dense or porous. Examples of oxides and silicates are SiO₂, TiO₂, ZrO₂, MgO, NiO, WO₃, Al₂O₃, La₂O₃, silica gels, clays and zeolites. Preferred inorganic substrates, in addition to metals, are silica gels, aluminium oxide, titanium oxide and glass and mixtures thereof.

As metal substrates there come into consideration especially Fe, Al, Ti, Ni, Mo, Cr and steel alloys.

After the application of the photoinitiator in process step b), the workpiece can be stored or immediately processed further, there being applied by means of known technology either (preferred) a radiation-curable coating containing ethylenically unsaturated bonds, or a coating that dries/cures in some other way, e.g. a printing ink. This can be effected by means of pouring, immersion, spraying, coating, knife application, roller application or spin-coating.

The unsaturated compounds of the radiation-curable composition in process step d1) may contain one or more ethylenically unsaturated double bonds. They may be lower molecular weight (monomeric) or higher molecular weight (oligomeric). Examples of monomers having a double bond are alkyl and hydroxyalkyl acrylates and methacrylates, e.g. methyl, ethyl, butyl, 2-ethylhexyl and 2-hydroxyethyl acrylate, isobornyl acrylate and methyl and ethyl methacrylate. Also of interest are silicone acrylates. Further examples are acrylonitrile, acrylamide, methacrylamide, N-substituted (meth)acrylamides, vinyl esters, such as vinyl acetate, vinyl ethers, such as isobutyl vinyl ether, styrene, alkyl- and halo-styrenes, N-vinylpyrrolidone, vinyl chloride and vinylidene chloride.

Examples of monomers having more than one double bond are ethylene glycol diacrylate, 1,6-hexanediol diacrylate, propylene glycol diacrylate, dipropylene glycol diacrylate, tripropylene glycol diacrylate, neopentyl glycol diacrylate, hexamethylene glycol diacrylate and bisphenol A diacrylate, 4,4'-bis(2-acryloyloxyethoxy)diphenylpropane, trimethylolpropane triacrylate, pentaerythritol triacrylate, pentaerythritol tetraacrylate, vinyl acrylate, divinylbenzene, divinyl succinate, diallyl phthalate, triallyl phosphate, triallyl isocyanurate, tris(hydroxyethyl) isocyanurate triacrylate (Sartomer 368; from Cray Valley) and tris(2-acryloylethyl) isocyanurate.

It is also possible in radiation-curable systems to use acrylic esters of alkoxylated polyols, for example glycerol ethoxylate triacrylate, glycerol propoxylate triacrylate, trimethylolpropaneethoxylate triacrylate, trimethylolpropanepropoxylate triacrylate, pentaerythritol ethoxylate tetraacrylate, pentaerythritol propoxylate triacrylate, pentaerythritol propoxylate tetraacrylate, neopentyl glycol ethoxylate diacrylate or neopentyl glycol propoxylate diacrylate. The degree of alkoxylation of the polyols used may vary.

Examples of higher molecular weight (oligomeric) polyunsaturated compounds are acrylated epoxy resins, acrylated or vinyl-ether- or epoxy-group-containing polyesters, polyurethanes and polyethers. Further examples of unsaturated oligomers are unsaturated polyester resins, which are usually produced from maleic acid, phthalic acid and one or more diols and have molecular weights of about from 500 to 3000. In addition it is also possible to use vinyl ether monomers and oligomers, and also maleate-terminated oligomers having polyester, polyurethane, polyether, polyvinyl ether and epoxide main chains. In particular, combinations of vinyl-ether-group-carrying oligomers and polymers, as described in WO 90/01512, are very suitable, but copolymers of monomers functionalised with maleic acid and vinyl ether also come into consideration. Such unsaturated oligomers can also be termed prepolymers.

Especially suitable are, for example, esters of ethylenically unsaturated carboxylic acids and polyols or polyepoxides, and polymers having ethylenically unsaturated groups in the chain or in side groups, e.g. unsaturated polyesters, polyamides and polyurethanes and copolymers thereof, alkyd resins, polybutadiene and butadiene copolymers, polyisoprene and isoprene copolymers, polymers and copolymers having (meth)acrylic groups in side chains, and also mixtures of one or more such polymers.

Examples of unsaturated carboxylic acids are acrylic acid, methacrylic acid, crotonic acid, itaconic acid, cinnamic acid and unsaturated fatty acids such as linolenic acid or oleic acid. Acrylic and methacrylic acid are preferred.
Suitable polyols are aromatic and especially aliphatic and cycloaliphatic polyols. Examples of aromatic polyols are hydroquinone, 4,4'-dihydroxydiphenyl, 2,2-di(4-hydroxyphenyl)propane, and novolaks and resols. Examples of polyepoxides are those based on the said polyols, especially the aromatic polyols and epichlorohydrin. Also suitable as polyols are polymers and copolymers that contain hydroxyl groups in the polymer chain or in side groups, e.g. polyvinyl alcohol and copolymers thereof or polymethacrylic acid hydroxyalkyl esters or copolymers thereof. Further suitable polyols are oligoesters having hydroxyl terminal groups.

Examples of aliphatic and cycloaliphatic polyols include alkylenediols having preferably from 2 to 12 carbon atoms, such as ethylene glycol, 1,2- or 1,3-propanediol, 1,2-, 1,3- or 1,4-butanediol, pentanediol, hexanediol, octanediol, dodecanediol, diethylene glycol, triethylene glycol, polyethylene glycols having molecular weights of preferably from 200 to 1500, 1,3-cyclopentanediol, 1,2-, 1,3- or 1,4-cyclohexanediol, 1,4-dihydroxymethylcyclohexane, glycerol, tris(β-hydroxyethyl)amine, trimethylolethane, trimethylolpropane, pentaerythritol, dipentaerythritol and sorbitol.

The polyols may have been partially or fully esterified by one or by different unsaturated carboxylic acid(s), it being possible for the free hydroxyl groups in partial esters to have been modified, for example etherified, or esterified by other carboxylic acids.

Examples of esters are:
trimethylolpropane triacrylate, trimethylolethane triacrylate, trimethylolpropane trimethacrylate, trimethylolethane trimethacrylate, tetramethylene glycol dimethacrylate, triethylene glycol dimethacrylate, tetraethylene glycol diacrylate, pentaerythritol diacrylate, pentaerythritol triacrylate, pentaerythritol tetraacrylate, dipentaerythritol diacrylate, dipentaerythritol triacrylate, dipentaerythritol tetraacrylate, dipentaerythritol pentaacrylate, dipentaerythritol hexaacrylate, tripentaerythritol octaacrylate, pentaerythritol dimethacrylate, pentaerythritol trimethacrylate, dipentaerythritol dimethacrylate, dipentaerythritol tetramethacrylate, tripentaerythritol octamethacrylate, pentaerythritol diitaconate, dipentaerythritol trisitaconate, dipentaerythritol pentaitaconate, dipentaerythritol hexaitaconate, ethylene glycol diacrylate, 1,3-butanediol diacrylate, 1,3-butanediol dimethacrylate, 1,4-butanediol diitaconate, sorbitol triacrylate, sorbitol tetraacrylate, pentaerythritol-modified triacrylate, sorbitol tetramethacrylate, sorbitol pentaacrylate, sorbitol hexaacrylate, oligoester acrylates and methacrylates, glycerol di- and tri-acrylate, 1,4-cyclohexane diacrylate, bisacrylates and bismethacrylates of polyethylene glycol having a molecular weight of from 200 to 1500, and mixtures thereof. Also suitable as a component are the amides of identical or different unsaturated carboxylic acids and aromatic, cycloaliphatic and aliphatic polyamines having preferably from 2 to 6, especially from 2 to 4, amino groups. Examples of such polyamines are ethylenediamine, 1,2- or 1,3-propylenediamine, 1,2-, 1,3- or 1,4-butylenediamine, 1,5-pentylenediamine, 1,6-hexylenediamine, octylenediamine, dodecylenediamine, 1,4-diamino-cydohexane, isophoronediamine, phenylenediamine, bisphenylenediamine, di-β-aminoethyl ether, diethylenetriamine, triethylenetetramine and di(β-aminoethoxy)- and di(β-aminopropoxy)-ethane. Further suitable polyamines are polymers and copolymers which may have additional amino groups in the side chain and oligoamides having amino terminal groups. Examples of such unsaturated amides are: methylene bisacrylamide, 1,6-hexamethylene bisacrylamide, diethylenetriamine trismethacrylamide, bis(methacrylamidopropoxy)ethane, β-methacrylamidoethyl methacrylate and N-[(β-hydroxyethoxy)ethyl]-acrylamide.

Suitable unsaturated polyesters and polyamides are derived, for example, from maleic acid and diols or diamines. The maleic acid may have been partially replaced by other dicarboxylic acids. They may be used together with ethylenically unsaturated comonomers, e.g. styrene. The polyesters and polyamides may also be derived from dicarboxylic acids and ethylenically unsaturated diols or diamines, especially from those having longer chains of e.g. from 6 to 20 carbon atoms. Examples of polyurethanes are those composed of saturated diisocyanates and unsaturated diols or unsaturated diisocyanates and saturated diols.

Polybutadiene and polyisoprene and copolymers thereof are known. Suitable comonomers include, for example, olefins, such as ethylene, propene, butene, hexene, (meth)acrylates, acrylonitrile, styrene and vinyl chloride. Polymers having (meth)acrylate groups in the side chain are likewise known. Examples are reaction products of novolak-based epoxy resins with (meth)acrylic acid; homo- or co-polymers of vinyl alcohol or hydroxyalkyl derivatives thereof that have been esterified with (meth)acrylic acid; and homo- and co-polymers of (meth)acrylates that have been esterified with hydroxyalkyl (meth)acrylates.
Also suitable are acrylates that have been modified by the reaction with primary or secondary amines, as described e.g. in US 3 844 916, in EP 280 222, in US 5 482 649 or in US 5 734 002. Such amine-modified acrylates are also termed aminoacrylates. Aminoacrylates are obtainable e.g. under the name ^{RTM}EBECRYL 80, ^{RTM}EBECRYL 81, ^{RTM}EBECRYL 83, ^{RTM}EBECRYL 7100 from UCB Chemicals, under the name ^{RTM}Laromer PO 83F, ^{RTM}Laromer PO 84F, ^{RTM}Laromer PO 94F from BASF, under the name ^{RTM}PHOTOMER 4775 F, ^{RTM}PHOTOMER 4967 F from Cognis or under the name ^{RTM}CN501, ^{RTM}CN503, ^{RTM}CN550 from Cray Valley.

In the context of the present Application the term (meth)acrylate includes both the acrylate and the methacrylate.
An acrylate or methacrylate compound is especially used as the mono- or poly-ethylenically unsaturated compound.
Very special preference is given to polyunsaturated acrylate compounds, such as have already been mentioned above.
Special preference is given to a process wherein at least one of the ethylenically unsaturated monomers or oligomers of the radiation-curable composition is a mono-, di-, tri- or tetra-functional acrylate or methacrylate.

The composition in step d1), in addition to comprising at least one ethylenically unsaturated monomer or oligomer, preferably comprises at least one further photoinitiator or coinitiator for the curing with UVNIS radiation.
The invention therefore relates also to a process wherein in process step d1) a photopolymerisable composition, comprising at least one ethylenically unsaturated monomer or/and oligomer and at least one photoinitiator and/or coinitiator, is applied to the pretreated substrate and cured by means of UVNIS radiation.

In the context of the present invention, UVNIS radiation is to be understood as being electromagnetic radiation in a wavelength range from 150 nm to 700 nm. Preference is given to the range from 250 nm to 500 nm. Suitable lamps are known to the person skilled in the art and are commercially available.
The photosensitivity of the compositions according to process step d1) usually extends from approximately 150 nm to approximately 600 nm (UV field). A large number of the most varied kinds of light source may be used. Both point sources and planiform radiators (lamp arrays) are suitable. Examples are: carbon arc lamps, xenon arc lamps, medium-pressure, super-high-pressure, high-pressure and low-pressure mercury radiators doped, where appropriate, with metal halides (metal halide lamps), microwave-excited metal vapour lamps, excimer lamps, superactinic fluorescent tubes, fluorescent lamps, argon incandescent lamps, flash lamps, photographic floodlight lamps, light-emitting diodes (LED), electron beams and X-rays. The distance between the lamp and the substrate to be irradiated may vary according to the intended use and the type and strength of the lamp and may be, for example, from 2 cm to 150 cm. Also suitable are laser light sources, for example excimer lasers, such as Krypton-F lasers for irradiation at 248 nm. Lasers in the visible range may also be used. This method may be used to produce printed circuits in the electronics industry, lithographic offset printing plates or relief printing plates and also photographic image-recording materials.

The above description of suitable radiation sources relates both to irradiation step c) (fixing of the photoinitiator) in the process according to the invention and the procedure of process step d1) (curing of the photocurable composition).
The curing of the composition applied in process step d1) or d2) may, in addition, likewise be carried out with daylight or with light sources equivalent to daylight.

Advantageously the dose of radiation used in process step c) is e.g. from 1 to 1000 mJ/cm², such as 1-800 mJ/cm², or, for example, 1-500 mJ/cm², e.g. from 5 to 300 mJ/cm², preferably from 10 to 200 mJ/cm².

As photoinitiator in the radiation-curable compositions according to process step d1) it is possible to use compounds of formula I, II, III or IV or any initiators and initiator systems known from the prior art.
In those compositions preference is given to the use of photoinitiators without unsaturated groups.

Typical examples are mentioned below, which can be used either singly or in admixture with one another. For example, benzophenones, benzophenone derivatives, acetophenone, acetophenone derivatives, for example α-hydroxycycloalkylphenyl ketone or 2-hydroxy-2-methyl-1-phenyl-propanone, dialkoxyacetophenones, α-hydroxy- or α-amino-acetophenones, for example (4-methylthiobenzoyl)-1-methyl-1-morpholino-ethane, (4-morpholinobenzoyl)-1-benzyl-1-dimethylamino-propane, (4-methylthiobenzoyl)-1-methyl-1-morpholinoethane, (4-morpholino-benzoyl)-1-(4-methyl-benzyl)-1-dimethylamino-propane, 4-aroyl-1,3-dioxolanes, benzoin alkyl ethers and benzil ketals, e.g. benzil dimethyl ketal, phenylglyoxalates and derivatives thereof, dimeric phenylglyoxalates, monoacylphosphine oxides, for example (2,4,6-trimethylbenzoyl)-phenyl-phosphine oxide, bisacylphosphine oxides, for example bis(2,6-dimethoxybenzoyl)-(2,4,4-trimethyl-pent-1-yl)phosphine oxide, bis(2,4,6-trimethylbenzoyl)-phenyl-phosphine oxide or bis(2,4,6-trimethylbenzoyl)-(2,4-dipentyloxyphenyl)phosphine oxide, trisacylphosphine oxides, ferrocenium compounds or titanocenes, for example dicyclopentadienyl-bis(2,6-difluoro-3-pyrrolo-phenyl)-titanium and borate salts.
Further examples of suitable photoinitiators are the compounds of formulae V, VI, VII, VIII, IX, X and XI described hereinbelore.
As coinitiators there come into consideration, for example, sensitisers which shift or broaden the spectral sensitivity and thus bring about an acceleration of the photopolymerisation. They are especially aromatic carbonyl compounds, for example benzophenone, thioxanthone, especially isopropyl thioxanthone, anthraquinone and 3-acylcoumarin derivatives, terphenyls, styryl ketones, and also 3-(aroylmethylene)-thiazolines, camphor quinone, and also eosine, rhodamine and erythrosine dyes.
Amines, for example, can also come into consideration as photosensitisers when the photoinitiator layer grafted on according to the invention consists of a benzophenone or benzophenone derivative.
Further examples of photosensitisers are

### 1. Thioxanthones

Thioxanthone, 2-isopropylthioxanthone, 2-chlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3-(2-methoxyethoxycarbonyl)-thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di[2-(2-methoxyethoxy)ethoxycarbonyl]thioxanthone, 1-ethoxycarbonyl-3-(1-methyl-1-morpholinoethyl)-thioxanthone, 2-methyl-6-dimethoxymethyl-thioxanthone, 2-methyl-6-(1,1-dimethoxybenzyl)-thioxanthone, 2-morpholinomethylthioxanthone, 2-methyl-6-morpholinomethylthioxanthone, N-allylthioxanthone-3,4-dicarboximide, N-octylthioxanthone-3,4-dicarboximide, N-(1,1,3,3-tetramethylbutyl)-thioxanthone-3,4-dicarboximide, 1-phenoxythioxanthone, 6-ethoxycarbonyl-2-methoxythioxanthone, 6-ethoxycarbonyl-2-methylthioxanthone, thioxanthone-2-polyethylene glycol ester, 2-hydroxy-3-(3,4-dimethyl-9-oxo-9H-thioxanthon-2-yloxy)-N,N,N-trimethyl-1-propanaminium chloride;

### 2. Benzophenones

Benzophenone, 4-phenylbenzophenone, 4-methoxybenzophenone, 4,4'-dimethoxybenzophenone, 4,4'-dimethylbenzophenone, 4,4'-dichlorobenzophenone, 4,4'-dimethylaminobenzophenone, 4,4'-diethylaminobenzophenone, 4-methylbenzophenone, 3-methyl-4'-phenylbenzophenone, 2,4,6-trimethylbenzophenone, 2,4,6-trimethyl-4'-phenyl-benzophenone, 4-(4-methylthiophenyl)-benzophenone, 3,3'-dimethyl-4-methoxybenzophenone, methyl 2-benzoylbenzoate, 4-(2-hydroxyethylthio)-benzophenone, 4-(4-tolylthio)benzophenone, 4-benzoyl-N,N,N-trimethylbenzenemethanaminium chloride, 2-hydroxy-3-(4-benzoylphenoxy)-N,N,N-trimethyl-1-propanaminium chloride monohydrate, 4-(13-acryloyl-1,4,7,10,13-pentaoxatridecyl)-benzophenone, 4-benzoyl-N,N-dimethyl-N-[2-(1-oxo-2-propenyl)oxy]ethyl-benzenemethanaminium chloride;

### 3. 3-Acylcoumarins

3-Benzoylcoumarin, 3-benzoyl-7-methoxycoumarin, 3-benzoyl-5,7-di(propoxy)coumarin, 3-benzoyl-6,8-dichlorocoumarin, 3-benzoyl-6-chlorocoumarin, 3,3'-carbonyl-bis[5,7-di(propoxy)coumarin], 3,3'-carbonyl-bis(7-methoxycoumarin), 3,3'-carbonyl-bis(7-diethylaminocoumarin), 3-isobutyroylcoumarin, 3-benzoyl-5,7-dimethoxycoumarin, 3-benzoyl-5,7-diethoxycoumarin, 3-benzoyl-5,7-dibutoxycoumarin, 3-benzoyl-5,7-di(methoxyethoxy)-coumarin, 3-benzoyl-5,7-di(allyloxy)coumarin, 3-benzoyl-7-dimethylaminocoumarin, 3-benzoyl-7-diethylaminocoumarin, 3-isobutyroyl-7-dimethylaminocoumarin, 5,7-dimethoxy-3-(1-naphthoyl)-coumarin, 5,7-dimethoxy-3-(1-naphthoyl)-coumarin, 3-benzoylbenzo[f]coumarin, 7-diethylamino-3-thienoylcoumarin, 3-(4-cyanobenzoyl)-5,7-dimethoxycoumarin;

### 4.3-(Aroylmethylene)-thiazolines

3-Methyl-2-benzoylmethylene-β-naphthothiazoline, 3-methyl-2-benzoylmethylenebenzothiazoline, 3-ethyl-2-propionylmethylene-β-naphthothiazoline;

### 5. Other carbonyl compounds

Acetophenone, 3-methoxyacetophenone, 4-phenylacetophenone, benzil, 2-acetylnaphthalene, 2-naphthaldehyde, 9,10-anthraquinone, 9-fluorenone, dibenzosuberone, xanthone, 2,5-bis(4-diethylaminobenzylidene)cyclopentanone, α-(para-dimethylaminobenzylidene)-ketones, such as 2-(4-dimethylamino-benzylidene)-indan-1-one or 3-(4-dimethylaminophenyl)-1-indan-5-yl-propenone, 3-phenylthiophthalimide, N-methyl-3,5-di(ethylthio)phthalimide, N-methyl-3,5-di(ethylthio)phthalimide.

In addition to those additives it is also possible for the radiation-curable composition to comprise further additives, especially light stabilisers. The nature and amount of such additional additives is governed by the intended use of the coating in question and will be familiar to the person skilled in the art.

The compositions may also be pigmented when a suitable photoinitiator is chosen, it being possible for coloured pigments as well as white pigments to be used.

The compositions can be applied in layer thicknesses of from about 0.1 µm to about 1000 µm, especially about from 1 µm to 100 µm. In the range of low layer thicknesses < 50 µm, pigmented compositions e.g. are also referred to as printing inks.

As light stabilisers it is possible to add UV absorbers, e.g. those of the hydroxyphenylbenzotriazole, hydroxyphenylbenzophenone, oxalic acid amide or hydroxyphenyl-s-triazine type. Such compounds can be used singly or in the form of mixtures, with or without the use of sterically hindered amines (HALS).
Examples of such UV absorbers and light stabilisers are
1. 2-(2'-Hydroxyphenyl)-benzotriazoles, e.g. 2-(2'-hydroxy-5'-methylphenyl)-benzotriazole, 2-(3',5'-di-tert-butyl-2'-hydroxyphenyl)-benzotriazole, 2-(5'-tert-butyl-2'-hydroxyphenyl)-benzotriazole, 2-(2'-hydroxy-5'-(1,1,3,3-tetramethylbutyl)-phenyl)-benzotriazole, 2-(3',5'-di-tert-butyl-2'-hydroxyphenyl)-5-chlorobenzotriazole, 2-(3'-tert-butyl-2'-hydroxy-5'-methylphenyl)-5-chlorobenzotriazole, 2-(3'-sec-butyl-5'-tert-butyl-2'-hydroxyphenyl)-benzotriazole, 2-(2'-hydroxy-4'-octyloxyphenyl)-benzotriazole, 2-(3',5'-di-tert-amyl-2'-hydroxyphenyl)-benzotriazole, 2-(3',5'-bis(α,α,-dimethylbenzyl)-2'-hydroxyphenyl)benzotriazole, mixture of 2-(3'-tert-butyl-2'-hydroxy-5'-(2-octyloxycarbonylethyl)phenyl)-5-chlorobenzotriazole, 2-(3'-tert-butyl-5'-[2-(2-ethylhexyloxy)carbonylethyl]-2'-hydroxyphenyl)-5-chlorobenzotriazole, 2-(3'-tert-butyl-2'-hydroxy-5'-(2-methoxycarbonylethyl)phenyl)-5-chlorobenzotriazole, 2-(3'-tert-butyl-2'-hydroxy-5'-(2-methoxycarbonylethyl)phenyl)-benzotriazole, 2-(3'-tert-butyl-2'-hydroxy-5'-(2-octyloxycarbonylethyl)phenyl)-benzotriazole, 2-(3'-tert-butyl-5'-[2-(2-ethylhexyloxy)carbonylethyl]-2'-hydroxyphenyl)-benzotriazole, 2-(3'-dodecyl-2'-hydroxy-5'-methylphenyl)-benzotriazole and 2-(3'-tert-butyl-2'-hydroxy-5'-(2-isooctyloxycarbonylethyl)-phenyl-benzotriazole, 2,2'-methylene-bis[4-(1,1,3,3-tetramethylbutyl)-6-benzotriazol-2-yl-phenol]; transesterification product of 2-[3'-tert-butyl-5'-(2-methoxycarbonylethyl)-2'-hydroxyphenyl]-benzotriazole with polyethylene glycol 300; [R-CH₂CH₂-COO(CH₂)₃]₂- wherein R = 3'-tert-butyl-4'-hydroxy-5'-2H-benzotriazol-2-yl-phenyl.
2. 2-Hydroxybenzophenones, e.g. the 4-hydroxy, 4-methoxy, 4-octyloxy, 4-decyloxy, 4-dodecyloxy, 4-benzyloxy, 4,2',4'-trihydroxy or 2'-hydroxy-4,4'-dimethoxy derivative.
3. Esters of unsubstituted or substituted benzoic acids, e.g. 4-tert-butyl-phenyl salicylate, phenyl salicylate, octylphenyl salicylate, dibenzoylresorcinol, bis(4-tert-butylbenzoyl)-resorcinol, benzoylresorcinol, 3,5-di-tert-butyl-4-hydroxybenzoic acid 2,4-di-tert-butylphenyl ester, 3,5-di-tert-butyl-4-hydroxybenzoic acid hexadecyl ester, 3,5-di-tert-butyl-4-hydroxybenzoic acid octadecyl ester, 3,5-di-tert-butyl-4-hydroxybenzoic acid 2-methyl-4,6-di-tert-butylphenyl ester.
4. Acrylates, e.g. α-cyano-β,β-diphenylacrylic acid ethyl ester or isooctyl ester, α-methoxycarbonylcinnamic acid methyl ester, α-cyano-β-methyl-p-methoxycinnamic acid methyl ester or butyl ester, α-methoxycarbonyl-p-methoxycinnamic acid methyl ester, N-(β-methoxycarbonyl-β-cyanovinyl)-2-methyl-indoline.
5. Sterically hindered amines, e.g. bis(2,2,6,6-tetramethylpiperidyl) sebacate, bis(2,2,6,6-tetramethylpiperidyl) succinate, bis(1,2,2,6,6-pentamethylpiperidyl) sebacate, n-butyl-3,5-di-tert-butyl-4-hydroxybenzylmalonic acid bis(1,2,2,6,6-pentamethylpiperidyl) ester, condensation product of 1-hydroxyethyl-2,2,6,6-tetramethyl-4-hydroxypiperidine and succinic acid, condensation product of N,N'-bis(2,2,6,6-tetramethyl-4-piperidyl)hexamethylenediamine and 4-tert-octylamino-2,6-dichloro-1,3,5-s-triazine, tris(2,2,6,6-tetramethyl-4-piperidyl) nitrilotriacetate, tetrakis(2,2,6,6-tetramethyl-4-piperidyl)-1,2,3,4-butanetetraoate, 1,1'-(1,2-ethanediyl)bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl) malonate, 3-n-octyl-7,7,9,9-tetramethyl-1,3,8-triazaspiro-[4.5]decane-2,4-dione, bis(1-octyloxy-2,2,6,6-tetramethylpiperidyl) sebacate, bis(1-octyloxy-2,2,6,6-tetramethylpiperidyl) succinate, condensation product of N,N'-bis(2,2,6,6-tetramethyl-4-piperidyl)hexamethylenediamine and 4-morpholino-2,6-dichloro-1,3,5-triazine, condensation product of 2-chloro-4,6-di(4-n-butylamino-2,2,6,6-tetramethylpiperidyl)-1,3,5-triazine and 1,2-bis(3-aminopropylamino)ethane, condensation product of 2-chloro-4,6-di(4-n-butylamino-1,2,2,6,6-pentamethylpiperidyl)-1,3,5-triazine and 1,2-bis(3-aminopropylamino)ethane, 8-acetyl-3-dodecyl-7,7,9,9-tetramethyl-1,3,8-triazaspiro[4.5]-decane-2,4-dione, 3-dodecyl-1-(2,2,6,6-tetramethyl-4-piperidyl)pyrrolidine-2,5-dione, 3-dodecyl-1-(1,2,2,6,6-pentamethyl-4-piperidyl)pyrrolidine-2,5-dione.
6. Oxalic acid diamides, e.g. 4,4'-dioctyloxyoxanilide, 2,2'-diethoxyoxanilide, 2,2'-dioctyloxy-5,5'-di-tert-butyl oxanilide, 2,2'-didodecyloxy-5,5'-di-tert-butyl oxanilide, 2-ethoxy-2'-ethyl oxanilide, N,N'-bis(3-dimethylaminopropyl) oxalamide, 2-ethoxy-5-tert-butyl-2'-ethyl oxanilide and a mixture thereof with 2-ethoxy-2'-ethyl-5,4'-di-tert-butyl oxanilide, mixtures of o- and p-methoxy- and also of o- and p-ethoxy-di-substituted oxanilides.
7. 2-(2-Hydroxyphenyl)-1,3,5-triazines, e.g. 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-[2-hydroxy-4-(2-hydroxy-3-butyloxypropyloxy)phenyl]-4,6-bis(2,4-dimethylphenyl)-1,3,5-triazine, 2-[2-hydroxy-4-(2-hydroxy-3-octyloxypropyloxy)phenyl]-4,6-bis(2,4-dimethylphenyl)-1,3,5-triazine, 2-[4-(dodecyloxy/tridecyloxy-2-hydroxypropyl)oxy-2-hydroxyphenyl]-4,6-bis(2,4-dimethylphenyl)-1,3,5-triazine.
   In addition to the light stabilisers mentioned above, other stabilisers, for example, such as phosphites or phosphonites, are also suitable.
8. Phosphites and phosphonites, e.g. triphenyl phosphite, diphenylalkyl phosphites, phenyldialkyl phosphites, tris(nonylphenyl)phosphite, trilauryl phosphite, trioctadecyl phosphite, distearyl-pentaerythritol diphosphite, tris(2,4-di-tert-butylphenyl)phosphite, diisodecylpentaerythritol diphosphite, bis(2,4-di-tert-butylphenyl)pentaerythritol diphosphite, bis(2,6-di-tert-butyl-4-methylphenyl)pentaerythritol diphosphite, bis-isodecyloxy-pentaerythritol diphosphite, bis(2,4-di-tert-butyl-6-methylphenyl)pentaerythritol diphosphite, bis(2,4,6-tri-tert-butylphenyl)pentaerythritol diphosphite, tristearyl sorbitol triphosphite, tetrakis(2,4-di-tert-butylphenyl)-4,4'-biphenylene diphosphonite, 6-isooctyloxy-2,4,8,10-tetra-tert-butyl-12H-dibenzo[d,g]-1,3,2-dioxaphosphocine, 6-fluoro-2,4,8,10-tetra-tert-butyl-12-methyl-dibenzo-[d,g]-1,3,2-dioxaphosphocine, bis(2,4-di-tert-butyl-6-methylphenyl)methyl phosphite, bis(2,4-di-tert-butyl-6-methylphenyl)ethyl phosphite.

Depending upon the field of use, it is also possible to use additives customary in the art, e.g. antistatics, flow improvers and adhesion promoters.

Compositions applied in process step d1) or d2) are, for example, pigmented or unpigmented surface coatings, inks, ink-jet inks; printing inks, for example screen printing inks, offset printing inks, flexographic printing inks; or overprint varnishes; or primers; or printing plates, offset printing plates; powder coatings, adhesives, pressure-sensitive adhesives, e.g. including hot-melt pressure-sensitive adhesives, or repair coatings, repair varnishes or repair putty compositions.

The compositions used in process step d1) need not necessarily comprise a photoinitiator- for example they may be customary electron-beam-curable compositions (without photoinitiator) known to the person skilled in the art.

The substrates pretreated using steps a) - c) in accordance with the process of the invention can, as already mentioned, be coated in a further step d1) with customary photocurable compositions and cured with UVNIS or an electron beam or d2) can be provided with a customary coating, such coatings being dried, for example, in air or thermally. The drying can be effected, for example, also by absorption, for example by penetration into the substrate.

The coating used in process step d2) is preferably a printing ink.
Such printing inks are known to the person skilled in the art, are used widely in the art and are described in the literature.
They are, for example, pigmented printing inks and printing inks coloured with dyes.
A printing ink is, for example, a liquid or paste-form dispersion that comprises colorants (pigments or dyes), binders and also optionally solvents and/or optionally water and additives. In a liquid printing ink, the binder and, if applicable, the additives are generally dissolved in a solvent. Customary viscosities in the Brookfield viscometer are, for example, from 20 to 5000 mPa·s, for example from 20 to 1000 mPa·s, for liquid printing inks. For paste-form printing inks, the values range, for example, from 1 to 100 Pa·s, preferably from 5 to 50 Pa·s. The person skilled in the art will be familiar with the ingredients and compositions of printing inks.
Suitable pigments, like the printing ink formulations customary in the art, are generally known and widely described.
Printing inks comprise pigments advantageously in a concentration of, for example, from 0.01 to 40 % by weight, preferably from 1 to 25 % by weight, especially from 5 to 10 % by weight, based on the total weight of the printing ink.
The printing inks can be used, for example, for intaglio printing, flexographic printing, screen printing, offset printing, lithography or continuous or dropwise ink-jet printing on material pretreated in accordance with the process of the invention using generally known formulations, for example in publishing, packaging or shipping, in logistics, in advertising, in security printing or in the field of office equipment.
Suitable printing inks are both solvent-based printing inks and water-based printing inks. Of interest are, for example, printing inks based on aqueous acrylate. Such inks are to be understood as including polymers or copolymers that are obtained by polymerisation of at least one monomer containing a group 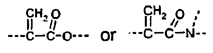 and that are dissolved in water or a water-containing organic solvent. Suitable organic solvents are water-miscible solvents customarily used by the person skilled in the art, for example alcohols, such as methanol, ethanol and isomers of propanol, butanol and pentanol, ethylene glycol and ethers thereof, such as ethylene glycol methyl ether and ethylene glycol ethyl ether, and ketones, such as acetone, ethyl methyl ketone or cyclo, for example isopropanol. Water and alcohols are preferred.
Suitable printing inks comprise, for example, as binder primarily an acrylate polymer or copolymer and the solvent is selected, for example, from the group consisting of water, C₁-C₅alcohols, ethylene glycol, 2-(C₁-C₅alkoxy)-ethanol, acetone, ethyl methyl ketone and any mixtures thereof.
In addition to the binder, the printing inks may also comprise customary additives known to the person skilled in the art in customary concentrations.
For intaglio or flexographic printing, a printing ink is usually prepared by dilution of a printing ink concentrate and can then be used in accordance with methods known *per se*.
The printing inks may, for example, also comprise alkyd systems that dry oxidatively.

The printing inks are dried in a known manner customary in the art, optionally with heating of the coating.

A suitable aqueous printing ink composition comprises, for example, a pigment or a combination of pigments, a dispersant and a binder.
Dispersants that come into consideration include, for example, customary dispersants, such as water-soluble dispersants based on one or more arylsulfonic acid/formaldehyde condensation products or on one or more water-soluble oxalkylated phenols, non-ionic dispersants or polymeric acids.
The arylsulfonic acid/formaldehyde condensation products are obtainable, for example, by sulfonation of aromatic compounds, such as naphthalene itself or naphthalene-containing mixtures, and subsequent condensation of the resulting arylsulfonic acids with formaldehyde. Such dispersants are known and are described, for example, in US-A-5 186 846 und DE-A-197 27 767. Suitable oxalkylated phenols are likewise known and are described, for example, in US-A-4 218 218 und DE-A-197 27 767. Suitable non-ionic dispersants are, for example, alkylene oxide adducts, polymerisation products of vinylpyrrolidone, vinyl acetate or vinyl alcohol and co- or ter-polymers of vinyl pyrrolidone with vinyl acetate and/or vinyl alcohol.
It is also possible, for example, to use polymeric acids which act both as dispersants and as binders.

Examples of suitable binder components that may be mentioned include acrylate-group-containing, vinyl-group-containing and/or epoxy-group-containing monomers, prepolymers and polymers and mixtures thereof. Further examples are melamine acrylates and silicone acrylates. The acrylate compounds may also be non-ionically modified (e.g. provided with amino groups) or ionically modified (e.g. provided with acid groups or ammonium groups) and used in the form of aqueous dispersions or emulsions (e.g. EP-A-704 469, EP-A-12 339). Furthermore, in order to obtain the desired viscosity the solventless acrylate polymers can be mixed with so-called reactive diluents, for example vinyl-group-containing monomers. Further suitable binder components are epoxy-group-containing compounds.
The printing ink compositions may also comprise as additional component, for example, an agent having a water-retaining action (humectant), e.g. polyhydric alcohols, polyalkylene glycols, which renders the compositions especially suitable for ink-jet printing.

It will be understood that the printing inks may comprise further auxiliaries, such as are customary especially for (aqueous) ink-jet inks and in the printing and coating industries, for example preservatives (such as glutardialdehyde and/or tetramethylolacetyleneurea, antioxidants, degassers/defoamers, viscosity regulators, flow improvers, anti-settling agents, gloss improvers, lubricants, adhesion promoters, anti-skin agents, matting agents, emulsifiers, stabilisers, hydrophobic agents, light stabilisers, handle improvers and antistatics. When such agents are present in the compositions, their total amount is generally ≤ 1 % by weight, based on the weight of the preparation.

Printing inks suitable in process step d2) also include, for example, those comprising a dye (with a total content of dyes of e.g. from 1 to 35 % by weight, based on the total weight of the ink).
Dyes suitable for colouring such printing inks are known to the person skilled in the art and are widely available commercially, e.g. from Ciba Spezialitätenchemie AG, Basel.
Such printing inks may comprise organic solvents, e.g. water-miscible organic solvents, for example C₁-C₄alcohols, amides, ketones or ketone alcohols, ethers, nitrogen-containing heterocyclic compounds, polyalkylene glycols, C₂-C₆alkylene glycols and thioglycols, further polyols, e.g. glycerol and C₁-C₄alkyl ethers of polyhydric alcohols, usually in an amount of from 2 to 30 % by weight, based on the total weight of the printing ink.
The printing inks may also, for example, comprise solubilisers, e.g. ε-caprolactam.
The printing inks may, *inter alia* for the purpose of adjusting the viscosity, comprise thickeners of natural or synthetic origin. Examples of thickeners include commercially available alginate thickeners, starch ethers or locust bean flour ethers. The printing inks comprise such thickeners e.g. in an amount of from 0.01 to 2 % by weight, based on the total weight of the printing ink.
It is also possible for the printing inks to comprise buffer substances, for example borax, borate, phosphate, polyphosphate or citrate, in amounts of e.g. from 0.1 to 3 % by weight, in order to establish a pH value of e.g. from 4 to 9, especially from 5 to 8.5.
As further additives, such printing inks may comprise surfactants or humectants. Surfactants that come into consideration include commercially available anionic and non-ionic surfactants. Humectants that come into consideration include, for example, urea or a mixture of sodium lactate (advantageously in the form of a 50 to 60 % aqueous solution) and glycerol and/or propylene glycol in amounts of e.g. from 0.1 to 30 % by weight, especially from 2 to 30 % by weight, in the printing inks.
Furthermore, the printing inks may also comprise customary additives, for example foam-reducing agents or especially substances that inhibit the growth of fungi and/or bacteria. Such additives are usually used in amounts of from 0.01 to 1 % by weight, based on the total weight of the printing ink.
The printing inks may also be prepared in customary manner by mixing the individual components together, for example in the desired amount of water.
As already mentioned, depending upon the nature of the use, it may be necessary for e.g. the viscosity or other physical properties of the printing ink, especially those properties which influence the affinity of the printing ink for the substrate in question, to be adapted accordingly.

The printing inks are also suitable, for example, for use in recording systems of the kind in which a printing ink is expressed from a small opening in the form of droplets which are directed towards a substrate on which an image is formed. Suitable substrates are, for example, textile fibre materials, paper, plastics or aluminium foils pretreated by the process according to the invention. Suitable recording systems are e.g. commercially available ink-jet printers.
Preference is given to printing processes in which aqueous printing inks are used.

When, according to process step d3), a metal, semi-metal, metal oxide or semi-metal oxide layer is applied as the strongly adhering layer, the following metals are preferred: gold, silver, platinum, palladium, chromium, molybdenum, tin, aluminium or copper, especially aluminium and copper. The following semi-metal and metal oxides are of interest: aluminium oxide, chromium oxide, iron oxide, copper oxide and silicon oxide.
The metals, semi-metal or metal oxides are vaporised under vacuum conditions and deposited onto the substrate precoated with photoinitiator.
The crucible temperatures for the vaporisation process depend upon the metal or oxide being vaporised and are, for example, 300-2000°C, especially 800-1800°C.
The metal-coated substrates are suitable, for example, for flexible circuit board applications, diffusion barrier layers, electromagnetic shields or they form decorative elements.

The process according to the invention can be carried out within a wide pressure range, the discharge characteristics shifting as the pressure increases from a pure low-temperature plasma towards a corona discharge and finally changing into a pure corona discharge at an atmospheric pressure of about 1000-1100 mbar.

The process is preferably carried out at a process pressure of from 10⁻⁸ mbar up to atmospheric pressure (1013 mbar), especially in the range of from 10⁻⁴ to 10⁻² mbar as a plasma process and at atmospheric pressure as a corona process. The flame treatment is usually carried out at atmospheric pressure.

The process is preferably carried out using as the plasma gas an inert gas or a mixture of an inert gas with a reactive gas.

When a corona discharge is used, air, CO₂ and/or nitrogen are preferably used as the gas. It is especially preferred to use air, H₂, CO₂, He, Ar, Kr, Xe, N₂, O₂ or H₂O singly or in the form of a mixture.

The photoinitiator layer deposited preferably has a thickness ranging from e.g. a monomolecular layer up to 500 nm, especially from 5 nm to 200 nm.

The plasma- or corona-treatment of the inorganic or organic substrate a) preferably takes place for from 1 ms to 300 s, especially from 10 ms to 200 s.

In principle, it is advantageous to apply the photoinitiator as quickly as possible after the plasma-, corona- or flame-pretreatment, but for many purposes it may also be acceptable to carry out reaction step b) after a time delay. It is preferable, however, to carry out process step b) immediately after process step a) or within 24 hours after process step a). Of interest is a process wherein process step c) is carried out immediately after process step b) or within 24 hours after process step b).

The pretreated and photoinitiator-coated substrate can be subjected to process step d) [that is to say d1) or d2)] immediately after the coating and drying in accordance with process steps a), b) and c) or it can be stored in the pretreated form.

The photoinitiator of formula I, II, III or IV, or where applicable the mixture of a plurality of photoinitiators and/or coinitiators, is applied to the corona-, plasma- or flame-pretreated substrate, for example, in pure form, that is to say without further additives, or in combination with a monomer or oligomer, or dissolved in a solvent. The initiator, or the initiator mixture, can also e.g. be in molten form. The initiator, or the initiator mixture, can also, for example, be dispersed, suspended or emulsified in water, a dispersant being added as necessary. Of course, it is also possible to use any mixture of the above-mentioned components, photoinitiator, monomer, oligomer, solvent, water.
Suitable dispersants, e.g. any surface-active compounds, preferably anionic and non-ionic surfactants, and also polymeric dispersants, are usually known to the person skilled io the art and are described, for example, in US 4 965 294 and US 5 168 087.
Suitable solvents are in principle any substances in which the photoinitiator, or the photoinitiators, can be converted into a state suitable for application, whether in the form of a solution or in the form of a suspension or emulsion. Suitable solvents are, for example, alcohols, such as ethanol, propanol, isopropanol, butanol, ethylene glycol etc., ketones, such as acetone, methyl ethyl ketone, acetonitrile, aromatic hydrocarbons, such as toluene and xylene, esters and aldehydes, such as ethyl acetate, ethyl formate, aliphatic hydrocarbons, e.g. petroleum ether, pentane, hexane, cyclohexane, halogenated hydrocarbons, such as dichloromethane, choroform, or alternatively oils, natural oils, castor oil, vegetable oil etc., and also synthetic oils. This description is on no account exhaustive and is given merely by way of example.
Alcohols, water and esters are preferred.

Suitable monomers and oligomers are, for example, those described above in connection with the photocurable composition (process step d1).

The invention therefore relates also to a process wherein the photoinitiators of formula I, II, III and/or IV or mixtures thereof with monomers or oligomers are used in combination with one or more liquids (such as solvents or water) in the form of solutions, suspensions and emulsions.

Also of interest is a process wherein the photoinitiator used in process step b) or the mixture of photoinitiators is used in molten form.

After the plasma-, corona- or flame-pretreatment, it is therefore possible in process step b) to apply to the pretreated substrate, for example, 0.1-15 %, e.g. 0.1-5 %, of a photoinitiator of formula I, II, III and/or IV having an unsaturated group and e.g. 0.5-10 % of a monomer, such as an acrylate, methacrylate, vinyl ether etc..
The application of the photoinitiators, or mixtures thereof with one another or with monomers or oligomers, in the form of melts, solutions, dispersions, suspensions or emulsions, can be carried out in various ways. Application can be effected by immersion, spraying, coating, brush application, knife application, roller application, printing, spin-coating and pouring. In the case of mixtures of photoinitiators with one another and with coinitiators and sensitisers, all possible mixing ratios can be used. When only one photoinitiator or photoinitiator mixture is to be applied to the pretreated substrate, the concentration of those initiators is, of course, 100 %.

When the photoinitiators are applied in the form of mixtures with monomers or/and solvents or/and water in the form of liquids, solutions, emulsions or suspensions, they are used, for example, in concentrations of from 0.01 to 99.9 %, or 0.01-80 %, e.g. 0.1-50 %, or 10-90 %, based on the solution being applied. The liquids comprising the photoinitiator may, in addition, contain e.g. further substances, such as defoamers, emulsifiers, surfactants, antifouling agents, wetting agents and other additives customarily used in the industry, especially the coating and paint industries.

Many possible methods of drying coatings are known and they can all be used in the claimed process. For example, it is possible to use hot gases, IR radiators, microwave and radio frequency radiators, ovens and heated rollers. Drying can also be effected, for example, by absorption, e.g. penetration into the substrate. This relates especially to the drying in process step c), but applies also to the drying carried out in process step d2). Drying can take place, for example, at temperatures of from 0°C to 300°C, for example from 20°C to 200°C.
The irradiation of the coating in order to fix the photoinitiator in process step c) (and also to cure the formulation in process step d1) can be carried out, as already mentioned above, using any sources that emit electromagnetic waves of wavelengths that can be absorbed by the photoinitiators used. Such sources are generally light sources that emit light in the range from 200 nm to 700 nm. It may also be possible to use electron beams. In addition to customary radiators and lamps it is also possible to use lasers and LEDs (Light Emitting Diodes). The whole area of the coating or parts thereof may be irradiated. Partial irradiation is of advantage when only certain regions are to be rendered adherent. Irradiation can also be carried out using electron beams.

The drying and/or irradiation can be carried out under air or under inert gas. Nitrogen gas comes into consideration as inert gas, but other inert gases, such as CO₂ or argon, helium *etc.* or mixtures thereof, can also be used. Suitable systems and apparatus are known to the person skilled in the art and are commercially available.

The invention relates also to strongly adherent coatings obtainable in accordance with the process described above.

Such strongly adherent coatings are important not only as protective layers or coverings, which may additionally be pigmented, but also for image-forming coatings, for example in resist and printing plate technology. In the case of image-forming processes, the irradiation can be effected through a mask or by writing using moving laser beams (Laser Direct Imaging - LDI). Such partial irradiation can be followed by a development or washing step in which portions of the applied coating are removed by means of solvents and/or water or mechanically.
When the process according to the invention is used in the production of image-forming coatings (imaging), for example in the production of printing plates or electronic printed circuit boards, the image-forming step can be carried out either in process step c) or in process step d).
In step d), depending upon the coating formulation used, the image-forming step may be a crosslinking reaction or alternatively a reaction in which the solubility of the formulation is altered.

The invention therefore relates also to a process wherein portions of the photo initiators, or mixtures thereof with monomers and/or oligomers, applied in process step b) that have not been crosslinked after irradiation in process step c) are removed by treatment with a solvent and/or water and/or mechanically, and to a process wherein after irradiation in process step d1) portions of the coating are removed by treatment with a solvent and/or water and/or mechanically.

It is also possible to use image-forming processes either in one of the two process steps c) and d1) or in both steps c) and d1) in succession.

The process according to the invention proves to be especially advantageous In respect of improving the adhesion of UV-curing coatings, printing inks, adhesives, on plastics, especially in respect of the adhesion of pigmented coatings. It is possible, for example, to produce pigmented and thick strongly adherent coating layers, for example also with black printing inks which exhibit high absorption.
In addition, the process according to the invention can be used to improve the adhesion of structurable metal coatings on organic and inorganic substrates.

The following Examples further illustrate the invention. As in the remainder of the description and in the claims, parts and percentages relate to weight, unless otherwise indicated. Where alkyl or alkoxy radicals having more than three carbon atoms are mentioned without any reference to their isomeric form, the data relate to the respective n-isomer.

### Example 1: Preparation of starting material lithium (2,4,6-trimethylbenzoyl)-phenyl-phosphine

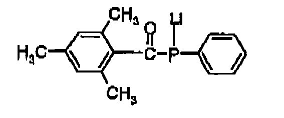

Under argon and with the exclusion of moisture, 14.0 g of lithium (2.0 mol) are Introduced at room temperature into 250 ml of tetrahydrofuran. At 20-25°C, with stirring. 44.8 g (0.25 mol) of dichlorophenylphosphine are added dropwise, Then 1.25 g of naphthalene are added and after 4 hours' stirring the red solution is filtered, with the exclusion of moisture and under argon as protective gas, through a frlt (G2 porosity) into a three-necked round-bottomed flask, At room temperature, with stirring and cooling, 47.2 g (0.258 mol) of 2,4,6-trimethylbenzoyl chloride are added dropwise within a period of 30 minutes. After 2 hours' stirring, the title compound is obtained in the form of a red solution in tetrahydrofuran. (Shift in the ³¹P-NMR: 98.4 ppm)

### Example 2: Preparation of 2,4,6-trimethylbenzoyl-allyl-phenyl-phosphine oxide

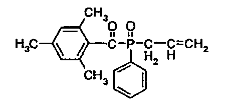

At 20-30°C, 6.05 g (0.05 mol) of allyl bromide are added dropwise within a period of 20 min to 35 ml (0.022 mol) of the solution as obtained in Example 1. After 2 hours' stirring, the orange reaction suspension is concentrated using a rotary evaporator. The residue is taken up in 50 ml of toluene, and 5.7 g (0.05 mol) of hydrogen peroxide 30 % are added. After 2 hours' stirring at 20-30°C, the reaction is complete. The reaction emulsion is poured into water and washed with aqueous saturated sodium hydrogen carbonate solution, then dried over magnesium sulfate and filtered. The filtrate is concentrated using a rotary evaporator. The residue is purified over silica gel and dried under a high vacuum. The title compound is obtained in the form of a yellowish oil. ³¹P-NMR 26.60 ppm; ¹H-NMR (ppm): 7.36-7.78 (m), 6.69 (s), 5.74-5.78 (m), 5.12-5.23 (m), 3.0-3.30 (m), 2.18 (s) and 1.97 (s), measured in CDCl₃

### Examples 3-5:

The compounds of Examples 3-5 are prepared analogously to the method described in Example 2, the compound according to Example 1 being reacted with the respective starting material indicated in the following Table. The compounds and their physical data are shown in the following Table 1.

**Table 1**

| Ex. | Compound | Starting material | Physical data [NMR spectra measured in CDCl₃; δ in ppm] |
|---|---|---|---|
| 3 | 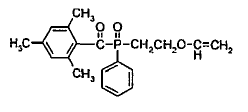 | 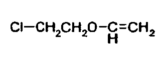 | ³¹P-NMR: 25.8 |
| | | | ¹H-NMR: 7.81-7.87 (m), 7.46-7.58 (m), 6.79 (s), 6.31-6.37 (dxd), 3.98-4.18 (m), 2.89-2.98 (m), 2.62-2.69 (m), 2.25 (s), 2.03 (s) |
| | | | m.p. 70°C |
| 4 | 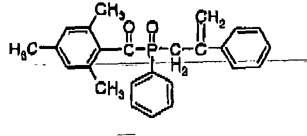 | 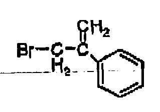 | ³¹P-NMR: 25.69 |
| | | | ¹H-NMR: 7.74-7.80 (m), 7.47-7.51 (m), 7.37-7.42 (m), 7.19-7.28 (m), 6.77 (s), 5.45-5.46 (d), 5,35-5.36 (d), 3.54-3.76 (m), 2,23 (s), 1.99 (s) |
| | | | m,p. 98°C |
| 5 | 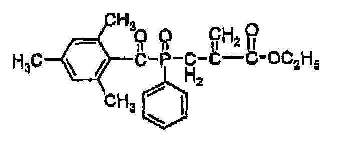 | 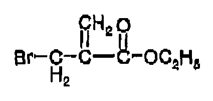 | ³¹ P-NMR: 24,6 |
| | | | ¹H-NMR; 7.82-7.88 (m), 7.44-7.58 (m), 6.78 (s), 6.34-6.35 (d). 5.88-5.89 (d), 4.09-4.16 (q), 3.44-3.65 (m), 2,24 (s), 2,02 (s), 1.19-1.34 (t) |
| | | | m.p. 90°C |

### Example 6: Preparation of starting material lithium (2,4,6-trimethylbenzoyl)-isobutylphosphine

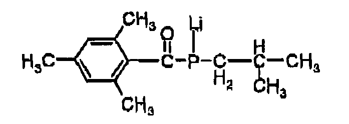

34.4 ml (0.055 mol, +10 %) of butyl lithium 1.6M are slowly added dropwise at 0-10°C to 4.5 g (0,025 mol) of Isobutylphenylphosphine (50 % solution in toluene) in 30 ml of tetrahydrofuran. Then, with the temperature unchanged, 4.6 g (0.026 mol) of 2.4,6-trimethylbenzoyl chloride are added dropwise. After heating to room temperature, the title compound is obtained in the form of an orange suspension (³¹P-NMR: 50 ppm).

### Example 7: Preparation of starting material lithium (2,4,6-trimethylbenzoyl)-(2,4,4-trimethylpentyl)-phosphine

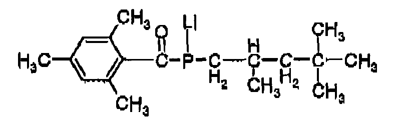

The compound is obtained analogously to the method described in Example 6 by replacing isobutylphenylphosphine by 2,4,4-trimethylpentylphosphine, (³¹P-NMR: 49.2 ppm).

### Example 8: Preparation of 2,4,6-trimethylbenzoyl-isobutyl-allyl-phosphine oxide

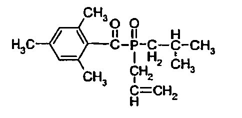

3.03 g (0.025 mol) of allyl bromide are slowly added dropwise at room temperature to the suspension of lithium (2,4,6-trimethylbenzoyl)-isobulyl-phosphine obtained according to Example 6. After 1 hour's stirring at room temperature, the orange reaction suspension is concentrated using a rotary evaporator. The residue is taken up in 50 ml of toluene, and 4.2 g (0.0375 mol) of hydrogen peroxide 30 % are added. After 2 hour's stirring at 20-30°C, the reaction is complete. The reaction emulsion is poured into water and washed with aqueous saturated sodium hydrogen carbonate solution, then dried over magnesium sulfate and filtered. The filtrate is concentrated using a rotary evaporator. The residue is purified over silica gel and dried under a high vacuum. The title compound is obtained in the form of a yellow viscous oil. ³¹P-NMR: 39.2 ppm; ¹H-NMR (ppm): 1.04 d; 1.07 d; 1.83 m; 2.19 m; 2.28 s; 2.31 s; 2.84 m; 5.21 m; 5.27 d; 5.83 m; 6.86 s, measured in CDCl₃.

### Example 9: Preparation of 2,4,6-trimethylbenzoyl-(2,4,4-trimethylpentyl)-allyl-phosphine oxide

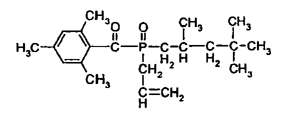

The compound of Example 9 is obtained analogously to the method described in Example 8 using the compound described in Example 7 and allyl bromide as starting materials. ³¹P-NMR: 39.06 ppm; ¹H-NMR (measured in CDCl₃; ppm): 0.90 d; 1.11-1.15 t; 1.20-1.39 m; 1.72-2.14 m; 2.28-2.31 d; 2.76-2.88 m; 5.20-5.27 m; 5.77-5.90 m; 6.86 s.

### Example 10:

Preparation of phenyl-phosphonous acid di-2-allyloxyethyl ester

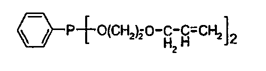

40 g (0.22 mol) of dichlorophenylphosphine, 56.87 g (0.47 mol) of N,N-dimethylaniline and 39.38 g (0.45 mol) 2-allyloxyethanol are introduced into 150 ml of diethyl ether and boiled at reflux overnight. After cooling to room temperature, filtration is carried out and the filtrate is purified by chromatography. The title compound is obtained in the form of a colourless liquid.

### Examples 11 and 12:

The compounds of Examples 11 and 12 are obtained analogously to the method described in Example 10. The compounds are shown in Table 2.

**Table 2**

| Ex. | Compound | Starting materials | Physical data |
|---|---|---|---|
| 11 | 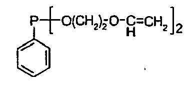 | 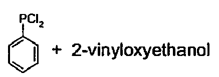 | Colourless oil |
| 12 | 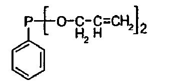 | 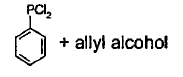 | Colourless oil |

### Example 13: Preparation of a mixture of phenyl-(2,4,6-trimethylbenzoyl)-phosphinic acid 2-vinyloxy-ethyl ester and phenyl-(2,4,6-trimethylbenzoyl)-phosphonic acid vinyl ester

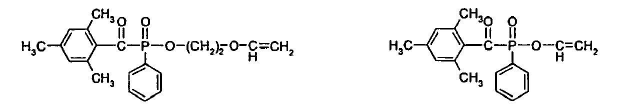

Under argon, 40.82 g (0.22 mol) of 2,4,6-trimethylbenzoic acid chloride dissolved in 50 ml of toluene are added dropwise at 80°C within a period of 30 minutes to 40 g (0.22 mol) of phenyl-phosphonous acid di-2-vinyloxy-ethyl ester in 150 ml of toluene. The reaction solution is stirred at 80°C for 18 hours, cooled and poured into aqueous K₂CO₃ solution. The organic phase is separated off and washed twice with water, dried over sodium sulfate and concentrated by evaporation using a rotary evaporator. The crude product is chromatographed on silica gel and the product is isolated as a mixture consisting of phenyl-(2,4,6-trimethylbenzoyl)phosphinic acid 2-vinyloxy-ethyl ester and phenyl-(2,4,6-trimethylbenzoyl)phosphonic acid vinyl ester in a ratio of 4:1 (according to ¹H-NMR) in the form of a yellowish oil. ³¹P-NMR of the mixture: 19.45 and 19.60 ppm; ¹H-NMR of the mixture, measured in CDCl₃ in ppm: 7.82-7.88 (m), 7.58-7.61 (m), 7.45-7.52 (m), 7.85 (s), 6.81 (s), 6.36-6.43 (dxd), 6.09-6.12 (m), 4.26-4.32 (m), 4.12-4.18 (dxd), 4.00-4.03 (dxd), 3.85-3.88 (t), 2.35 (s), 2.27 (s), 2.15 (s).

### Examples 14-15:

The compounds of Examples 14 and 15 are prepared analogously to the method described in Example 10 from 2,4,6-trimethylbenzoic acid chloride and the respective starting material indicated in Table 2. The compounds and the physical data are given in the following Table 3.

**Table 3**

| Ex. | Compound | Starting material | Physical data [NMR spectra measured in CDCl₃; δ in ppm] |
|---|---|---|---|
| 14 | 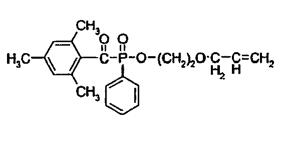 | 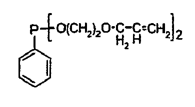 | ³¹P-NMR: 19.34 |
| | | | ¹H-NMR: 7.82-7.89 (m), 7.57-7.60 (m), 6.81 (s), 5.79-5.88 (m), 5.13-5.26 (m), 4.18-4.23 (m), 3.92-3.95 (dxd), 3.61-3.64 (t), 2.26 (s), 2.16 (s) |
| | | | yellowish oil |
| 15 | 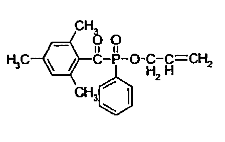 | 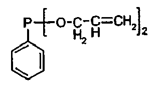 | ³¹P-NMR: 19.14 |
| | | | ¹H-NMR: 7.82-7.89 (m), 7.58-6.61 (m), 7.47-7.52 (m), 6.82 (s), 5.87-5.96 (m), 5.20-5.33 (m), 4.55-4.60 (m), 2.27 (s), 2.16 (s) |
| | | | yellowish oil |

### Example 16: Adhesion of a blue printing ink (Not according to the present invention)

Films of polypropylene (PP Pentaprop) are treated at 5x10⁻²mbar for about 1 second with an argon/O₂ plasma (30 sccm:6 sccm). The plasma is switched off and the pressure is reduced to 5x10⁻⁵mbar. In the plasma chamber there are vaporised in a heatable crucible in one test the photoinitiator from Example 5 at 100°C and, in another instance, the photoinitiator from Example 3 at 85°C for about 2-3 minutes, a layer thickness of about 20 nm being obtained in each case. The thickness is measured by means of a commercially available quartz resonator.
A radiation-curable blue printing ink (UV-Temp 43 Y 000 239, Hostmann Steinberg) is applied to the substrates so pretreated in a layer thickness of about 2 µm. Curing is effected by exposure using a Fusion H lamp (120 W/cm) at a belt speed of 30 m/min. The adhesion properties are tested by crosscutting and tearing off an adhesive tape strip applied to the cured formulation (crosscut test; CC test).
Whereas no adhesion is obtained on a non-pretreated sample, good adhesion is achieved on substrates that have been pretreated with both the photoinitiators used.

### Example 17: Adhesion of a blue printing ink (Not according to the present invention)

Polypropylene films are pretreated as described in Example 16, the photoinitiator according to Example 5 being used. Prior to application of the printing ink, the treated films are stored for 30 days and then coated with printing ink and tested as described in Example 16. Good adhesion is achieved in this case too.

### Example 18: Adhesion of a blue printing ink (according to the present invention)

Films of polypropylene (PP Pentaprop 11/0000 621H2, 250 µm, Klöckner Penataplast) are subjected to a corona treatment three times at a speed of 20 m/min and an output of 1000 W and then coated with a solution of 1 % of the initiator from Example 3 and 1 % tris(2-hydroxyethyl)-isocyanurate triacrylate in isopropanol using a 6 µm wire bar. After drying, the films are exposed by means of a Fusion H lamp (120 W/cm) at a belt speed of 15 m/min. An approximately 1-2 µm thick layer of a UV-curable blue offset printing ink (Sicura Plast 770, SICPA) is printed onto the resulting treated films by means of an Orange-Proofer (IGT Testing Systems) at a printing force of 500 N. The layer is cured by means of a Fusion H lamp (120 W/cm) at a belt speed of 15 m/min. Evaluation of the crosscut test for the treated films results in a CC value of 0 (no detachment), whereas a solely corona-treated sample has a CC value of 1 and an untreated film has a CC value of 5 (complete detachment).

### Example 19:

PP films (Rayoface Polypropylene Film 58 µm, UCB) are subjected to a corona treatment at a speed of 50 m/min and an output of 1000 W and then coated with a solution of 1 % of the initiator of Example 3 and 1 % tris(2-hydroxyethyl)-isocyanurate triacrylate in isopropanol by means of a 6 µm wire bar. After drying, the films are exposed using a Fusion H lamp (120 W/cm) at a belt speed of 15 m/min. An approximately 1-2 µm thick layer of a UV-curable blue offset printing ink (Sicura Plast 770, SICPA) is printed onto the resulting treated films by means of an Orange-Proofer (IGT Testing Systems) at a printing force of 500 N. The layer is cured by means of a Fusion H lamp (120 W/cm) at a belt speed of 15 m/min. The evaluation of the crosscut test for the treated films results in a CC value of 0 (no detachment), whereas a solely corona-treated sample has a CC value of 4-5 and an untreated film has a CC value of 5 (complete detachment).

## Claims

1. A process for the production of a strongly adherent coating on an inorganic or organic substrate, wherein
a) a low-temperature plasma treatment, a corona discharge treatment or a flame treatment is carried out on the inorganic or organic substrate,
b) one or more photoinitiators or mixtures of photoinitiators with monomers or/and oligomers, containing at least one ethylenically unsaturated group, or solutions, suspensions or emulsions of the afore-mentioned substances, are applied to the inorganic or organic substrate, and optionally
c) using suitable methods those afore-mentioned substances are dried and are irradiated with electromagnetic waves,
wherein there Is used as photoinitiator at least one compound of formula (I), (II), (III) and/or (IV)
IN-L-RG (I)
IN-L-RG₁-L₁-H (II)
IN-L-RG₁-L₁-IN₁ (III)
IN-L-RG₁-L₁-RG₂-L₂-IN₁ (IV),
wherein
**IN** and **IN₁** are each independently of the others a monacylphosphine, monoacylphosphine oxide or monoacylphosphine sulfide photoinitiator group;
**L, L₁** and **L₂** are each independently of the others a single bond or a spacer group;
RG is a monovalent radical having at least one ethylenically unsaturated C=C bond; and
**RG₁** and **RG₂** are each independently of the other a divalent radical having at least one ethylenically unsaturated C=C bond;
and either
d1) the substrate so precoated with photoinitiator is coated with a composition comprising at least one ethylenically unsaturated monomer or oligomer and the coating is cured by means of UV/VIS radiation or an electron beam; or
d2) the substrate so precoated with photoinitiator is coated with a printing ink and dried; or
d3) a metal, semi-metal, metal oxide or semi-metal oxide is deposited from the gaseous phase onto the substrate so precoated with photoinitiator.

2. A process according to claim 1, wherein in the compounds of formulae (I), (II), (III) and (IV)
IN and IN₁ are each independently of the other 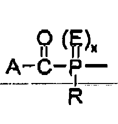 wherein
E is O or S;
x is 0 or 1;
A is 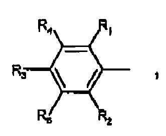 cyclopentyl, cyclohexyl, naphthyl, biphenylyl, anthryl or an O-, S- or N-containing 5- or 6-membered heterocyclic ring, wherein the radicals cyclopentyl, cyclohexyl, naphthyl, biphenylyl, anthryl or the O-, S- or N-containing 5- or 6-membered heterocyclic ring are unsubstituted or substituted by halogen, C₁-C₄alkyl or by C₁-C₄alkoxy;
R₁ and R₂ are each independently of the other C₁-C₂₄alkyl, OR₁₁, CF₃ or halogen;
R₃, R₄ and R₅ are each independently of the others hydrogen, C₁-C₂₄alkyl, OR₁₁ or halogen;
or two of the radicals R₁, R₂, R₃, R₄ or R₅ together are C₂-C₁₂alkylene which is uninterrupted or interrupted by one or more O, S or NR₁₄;
R is C₁-C₂₄alkyl unsubstituted or substituted by C₃-C₂₄cycloalkyl, C₃-C₂₄cycloalkenyl, phenyl, CN, C(O)R₁₁, C(O)OR₁₁, C(O)N(R₁₄)₂, OC(O)R₁₁, OC(O)OR₁₁, N(R₁₄)C(O)N(R₁₄), OC(O)NR₁₄, N(R₁₄)C(O)OR₁₁, halogen, OR₁₁, SR₁₁ or by N(R₁₂)(R₁₃); or R is C₂-C₂₄alkyl interrupted one or more times by non-consecutive O or S and unsubstituted or substituted by phenyl, OR₁₁, CN, C(O)R₁₁, C(O)OR₁₁ or by C(O)N(R₁₄)₂;
or R is C₂-C₂₄alkenyl uninterrupted or interrupted one or more times by non-consecutive O and unsubstituted or substituted by OR₁₁ or by C₁-C₁₂alkyl;
or R is C₅-C₂₄cycloalkenyl uninterrupted or interrupted one or more times by non-consecutive O, S or NR₁₄ and unsubstituted or substituted by OR₁₁ or by C₁-C₁₂alkyl;
or R is C₇-C₂₄arylalkyl unsubstituted or substituted at the aryl radical by C₁-C₁₂alkyl or by C₁-C₁₂alkoxy;
or R is C₄-C₂₄cycloalkyl uninterrupted or interrupted one or more times by non-consecutive O, S or NR₁₄ and unsubstituted or substituted by OR₁₁ or by C₁-C₁₂alkyl;
or R is 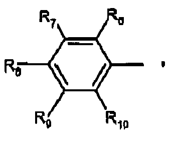 C₈-C₂₄arylcycloalkyl or C₈-C₂₄arylcycloalkenyl;
R₆, R₇, R₈, R₉ and R₁₀ are each independently of the others hydrogen, C₁-C₂₄alkyl unsubstituted or substituted by SR₁₁, N(R₁₂)(R₁₃), OR₁₁ or by phenyl; or R₆, R₇, R₈, R₉ and R₁₀ are C₂-C₂₄alkyl interrupted one or more times by non-consecutive O and unsubstituted or substituted by SR₁₁, N(R₁₂)(R₁₃), OR₁₁ or by phenyl; or R₆, R₇, R₈, R₉ and R₁₀ are SR₁₁, N(R₁₂)(R₁₃), OR₁₁, phenyl or halogen;
**R₁₁** is hydrogen, C₁-C₂₀alkyl, C₂-C₂₀alkenyl, C₃-C₈cycloalkyl, benzyl; or R₁₁ is C₂-C₂₀alkyl interrupted one or more times by O, or C₂-C₂₀alkenyl interrupted one or more times by O; or R₁₁ is phenyl unsubstituted or substituted by C₁-C₄alkyl or by C₁-C₄alkoxy;
**R₁₂** and **R₁₃** are each independently of the other hydrogen, C₁-C₂₀alkyl, C₂-C₂₀alkenyl, C₃-C₈cycloalkyl or benzyl: or R₁₂ and R₁₃ are C₂-C₂₀alkyl interrupted one or more times by O, or C₂-C₂₀alkenyl interrupted one or more times by O; or R₁₂ and R₁₃ are phenyl unsubstituted or substituted by C₁-C₄alkyl or by C₁-C₄alkoxy; or R₁₂ and R₁₃, together with the nitrogen atom to which they are bonded, form a 5- or 6-membered ring uninterrupted or interrupted by O or by NR₁₄;
**R₁₄** is hydrogen, C₁-C₁₂alkyl; phenyl unsubstituted or substituted by C₁-C₄alkyl or by C₁-C₄-alkoxy, or benzyl unsubstituted or substituted by C₁-C₄alkyl or by C₁-C₄alkoxy, or R₁₄ is C₂-C₁₂alkyl interrupted one or more times by O;
**L is** a radical-Z-[(A₁)ₐ-Y]_{c}-[(A₂)_{b}-X]_{d}-;
**X, Y** and **Z** are each independently of the others a single bond, -O-, -S-, -N(R₁₆)-, -(CO)-, -(CO)O-, -(CO)N(R₁₆)-, -O-(CO)-, -N(R₁₆)-(CO)- or -N(R₁₆)-(CO)O-;
**A₁** and **A₂** are each independently of the other C₁-C₁₂alkylene, C₃-C₁₂cycloalkylene, phenylene, phenylene-C₁-C₄alkylene or C₁-C₄alkylene-phenylene-C₁-C₄alkylene;
**a, b, c** and **d** are each independently of the others a number 0 to 4; and
**R₁₆** is hydrogen, C₁-C₁₂alkyl or phenyl;
**RG** is a radical -R_{d}C=CₑR_{f};
**RG₁** and **RG₂** are each independently of the other -R_{d}C=CRₑ- or 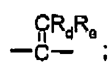 and
**R_{d}, Rₑ** and **R_{f}** are each independently of the others hydrogen, C₁-C₄alkyl, phenyl, (CO)O-(C₁-C₄alkyl) or C₁-C₄alkylphenyl.

3. A process according to claim 1, wherein a compound of formula (I) is used.

4. A process according to claim 1, wherein in addition to the compounds of formula (I), (II), (III) and/or (IV) further photoinitiators (p) are used.

5. A process according to claim 4, wherein the further photoinitiators (p) are compounds of formula V, VI, VII, VIII, IX, X or/and XI 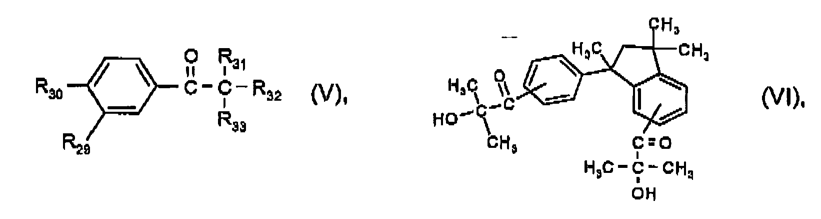 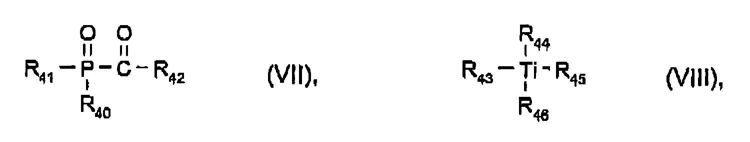 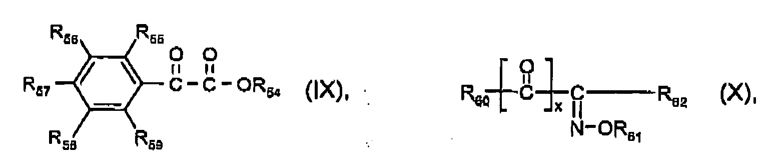 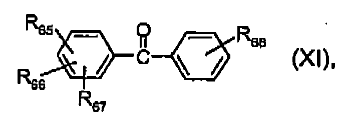 wherein
**R₂₀** is hydrogen or C₁-C₁₆alkoxy;
**R₃₀** is hydrogen, C₁-C₁₈alkyl, C₁-C₁₈alkoxy, -OCH₂CH₂-OR₄₇, morpholino, SCH₃, or a group 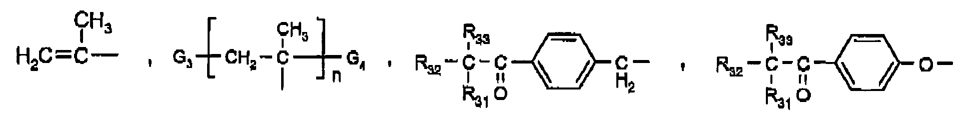 or 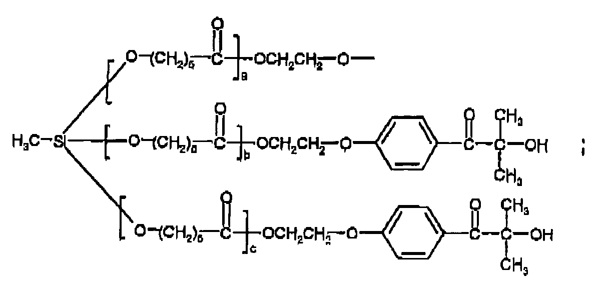
a, b and c are an average of 3;
**n** is a value of from 2 to 10;
**G₃** and **G₄** are each independently of the other terminal groups of the polymeric unit, especially hydrogen or CH₃;
**R₃₁** is hydroxy, C₁-C₁₆alkoxy, morpholino, dimethylamino or -O(CH₂CH₂O)ₘ-C₁-C₁₆alkyl;
**R₃₂** and **R₃₃** are each independently of the other hydrogen, C₁-C₆alkyl, C₁-C₁₆alkoxy or -O(CH₂CH₂O)ₘ-C₁-C₁₆alkyl; or R₃₂ and R₃₃ are phenyl or benzyl, those radicals being unsubstituted or substituted by C₁-C₁₂alKyl; or R₃₂ and R₃₃, together with the carbon atom to which they are bonded, form a cyclohexyl ring;
**m** is a number from 1 to 20;
but R₃₁, R₃₂ and R₃₃ are not all simultaneously C₁-C₁₆alkoxy or -O(CH₂CH₂O)ₘ-C₁-C₁₆alkyl:
R₄₇ is hydrogen. 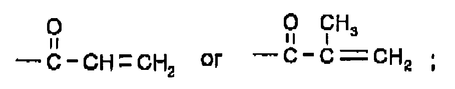
**R₃₄, R₃₆, R₃₇** and **R₃₈** are each independently of the others hydrogen or methyl;
**R₃₅** and **R₃₉** are hydrogen, methyl or phenylthio, wherein the phenyl ring of the phenylthio radical is unsubstituted or substituted in the 4-, 2-, 2,4- or 2,4,6-position(s) by C₁-C₄alkyl;
**R₄₀** and **R₄₁** are each independently of the other C₁-C₂₀alkyl, cyclohexyl, cyclopentyl, phenyl, naphthyl or biphenylyl, those radicals being unsubstituted or substituted by halogen, C₁-C₁₂alkyl, C₁-C₁₂alkoxy, C₁-C₁₂alkylthio or by NR₅₂R₅₃, or R₄₀ and R₄₁ are a S- or N-containing 5- or 6-membered heterocyclic ring or -(CO)R₄₂;
**R₄₂** is cyclohexyl, cyclopentyl, phenyl, naphthyl or biphenylyl, those radicals being unsubstituted or substituted by halogen, C₁-C₄alkyl or/and by C₁-C₄alkoxy, or R₄₂ is a S- or N-containing 5- or 6-membered heterocyclic ring;
**R₄₃** and **R₄₄** are each independently of the other cyclopentadienyl unsubstituted or mono-, di- or tri-substituted by C₁-C₁₆alkyl, C₁-C₁₈alkoxy, cyclopentyl, cyclohexyl or by halogen;
**R₄₅** and **R₄₆** are each independently of the other phenyl which is substituted by fluorine atoms or CF₃ in at least one of the two positions ortho to the titanium-carbon bond and may contain, as further substituents at the aromatic ring, polyoxaalkyl or pyrrolinyl unsubstituted or substituted by one or two C₁-C₁₂alkyl, di(C₁-C₁₂alkyl)aminomethyl, morpholinomethyl, C₂-C₄alkenyl, methoxymethyl, ethoxymethyl, trimethylsilyl, formyl, methoxy or phenyl substituents,
or R₄₅ and R₄₆ are 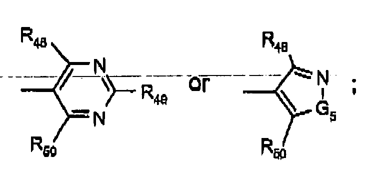
**R₄₈, R₄₉** and **R₅₀** are each independently of the others hydrogen, halogen, C₂-C₁₂alkenyl. C₁-C₁₂alkoxy, C₂-C₁₂alkoxy interrupted by from one to four O atoms, cyclohexyloxy, cyclopentyloxy, phenoxy, benzyloxy, or phenyl or biphenylyl each unsubstituted or substituted by C₁-C₄alkoxy, halogen, phenylthio or by C₁-C₄alkylthio,
wherein R₄₈ and R₅₀ are not both simultaneously hydrogen and in the radical 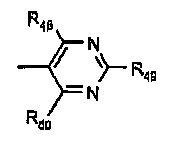 at least one radical R₄₈ or R₅₀ is C₁-C₁₂alkoxy, C₂-C₁₂alkoxy interrupted by from one to four 0 atoms, cyclohexyloxy, cyclopentyloxy, phenoxy or benzyloxy;
**G₅** is O, S or NR₅₁; and
**R₅₁** is C₁-C₈alkyl, phenyl or cyclohexyl;
**R₅₂** and **R₅₃** are each independently of the other hydrogen; C₁-C₁₂alkyl uninterrupted or Interrupted by O atoms and unsubstituted or substituted by OH or by SH; or R₅₂ and R₆₃ are C₂-C₁₂alkenyl, cyclopentyl, cyclohexyl, benzyl, phenyl;
**R₅₄ is** hydrogen, C₁-C₁₂alkyl or a group 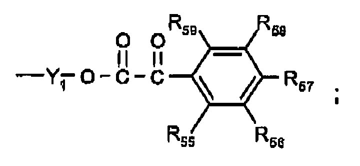
**R₅₅, R₅₆,** R₅₇, **R₅₈** and **R₅₉** are each independently of the others hydrogen; C₁-C₁₂alkyl which is unsubstituted or substituted by OH, C₁-C₄alkoxy, phenyl, naphthyl, halogen or by CN and may be Interrupted by one or more O atoms; or R₅₅, R₅₆, R₅₇, R₅₈ and R₅₉ are C₁-C₄alkoxy, C₁-C₄alkylthio or NR₅₂R₅₃;
**Y₁** is a divalent aliphatic or aromatic radical, especially C₁-C₁₂alkylene;
**x** is 0 or 1;
**R₈₀** is phenyl, naphthyl, or, when x is 0, 9H-carbazol-3-yl, or (9-oxo-9H-thioxanthen-2-yl)-, all those radicals being unsubstituted or substituted by one or more SR₆₃, OR₆₄, NR₅₂R₅₃, halogen, C₁-C₁₂alkyl, phenyl, benzyl, -(CO)-C₁-C₄alkyl, -(CO)-phenyl or -(CO)-phenylene-C₁-C₄alkyl substituents;
**R₆₁** is C₄-C₉cycloalkanoyl; C₁-C₁₂alkanoyl unsubstituted or substituted by one or more halogen, phenyl or CN substituents; or R₆₁ is C₄-C₆alkenoyl, with the proviso that the double bond is not conjugated with the carbonyl group; or R₆₁ is benzoyl unsubstituted or substituted by one or more C₁-C₆alkyl, halogen, CN, OR₆₄, SR₆₃ or NR₅₂R₅₃ substituents; or R₆₁ is C₂-C₆alkoxycarbonyl, benzyloxycarbonyl; or phenoxycarbonyl unsubstituted or substituted by one or more C₁-C₆alkyl or halogen substituents;
**R₆₂** is hydrogen, phenyl or benzoyl, the radicals phenyl and benzoyl being unsubstituted or substituted by C₁-C₆alkyl, phenyl, halogen, OR₆₄, SR₆₃ or by NR₆₂R₅₃; or R₆₂ is C₁-C₂₀alkyl or C₂-C₁₂alkoxycarbonyl, the radicals C₁-C₂₀alkyl and C₂-C₁₂alkoxycarbonyl being unsubstituted or substituted by OH and uninterrupted or interrupted by one or more O atoms; or R₆₂ is C₂-C₂₀alkanoyl, benzyl, benzyl-(CO)-, C₁-C₆alkyl-SO₂- or phenyl-SO₂-;
**R₆₃** and **R₆₄** are each independently of the other hydrogen or C₁-C₁₂alkyl unsubstituted or substituted by OH, SH, CN, phenyl, (CO)O-C₁-C₄alkyl, O(CO)-C₁-C₄alkyl, COOH, O(CO)-phenyl, and such unsubstituted or substituted C₁-C₁₂alkyl may be interrupted by one or more O atoms; or R₆₃ and R₆₄ are cyclohexyl, or phenyl unsubstituted or substituted by C₁-C₁₂alkyl, C₁-C₁₂alkoxy or by halogen, or phenyl-C₁-C₃alkyl;
**R₆₅, R₆₆** and **R₆₇** are each independently of the others hydrogen, C₁-C₄alkyl, C₁-C₄haloalkyl, C₁-C₄alkoxy, chlorine or N(C₁-C₄alkyl)₂;
**R₆₆** is hydrogen, C₁-C₄alkyl, C₁-C₄haloalkyl, phenyl, N(C₁-C₄alkyl)₂, COOCH₃, 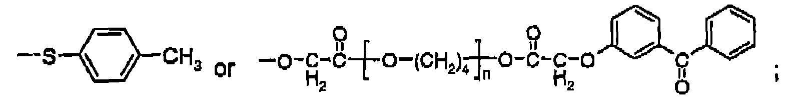 or R₆₆ and R₆₇ together are -S-:

6. A process according to any one of preceding claims 1 to 5, wherein the photoinitiators of formula (I), (II), (III) and/or (IV) or mixtures thereof with monomers or oligomers are used in combination with one or more liquids (such as solvents or water) in the form of solutions, suspensions and emulsions.

7. A process according to claim 1, wherein in process step d1) a photopolymerisable composition, comprising at least one ethylenically unsaturated monomer or/and oligomer and at least one photoinitiator and/or coinitiator, is applied to the pretreated substrate and cured by means of UVNIS radiation.

8. A process according to claim 1, wherein as plasma gas there is used an inert gas or a mixture of an inert gas with a reactive gas.

9. A process according to claim 8, wherein air, H₂, CO₂, He, Ar, Kr, Xe, N₂, O₂ or H₂O are used singly or in the form of a mixture.

10. A process according claim 1, wherein the applied photoinitiator layer has a layer thickness of up to 500 nm, preferably from a monomolecular layer up to 200 nm.

11. A process according to claim 1, wherein process step b) is carried out immediately after process step a) or within 24 hours after process step a).

12. A process according to claim 1, wherein the concentration of the photoinitiator or photoinitiators in process step b) is from 0.01 to 99.5 %, preferably from 0.1 to 80 %.

13. A process according to claim 1, wherein process step c) is carried out immediately after process step b) or within 24 hours after process step b),

14. A process according to claim 1, wherein drying in process step c) is carried out in an oven, with warm gas, heated rollers or an IR or microwave radiator or by absorption.

15. A process according to claim 1, wherein irradiation in process step c) is carried out using a source that emits electromagnetic waves having wavelengths in the range of from 200 nm to 700 nm or by means of an electron beam.

16. A process according to claim 1, wherein portions of the photoinitiators, or mixtures thereof with monomers and/or oligomers, applied in process step b) that have not been crosslinked after irradiation in process step c) are removed by treatment with a solvent and/or water and/or mechanically.

17. A process according to claim 1, wherein after irradiation in process step d1) portions of the coating are removed by treatment with a solvent and/or water and/or mechanically.

18. A strongly adherent coating obtainable by a process according to any one of preceding claims 1 to 17.

## Patentansprüche

1. Verfahren zur Herstellung einer stark haftenden Beschichtung auf einem anorganischen oder organischen Substrat, wobei
a) eine Niedrigtemperaturplasmabehandlung, eine Koronaentladungsbehandlung oder eine Beflammung an dem anorganischen oder organischen Substrat durchgeführt wird,
b) ein oder mehrere Photoinitiatoren oder Gemische aus Photoinitiatoren mit Monomeren oder/und Oligomeren, die mindestens eine ethylenisch ungesättigte Gruppe enthalten, oder Lösungen, Suspensionen oder Emulsionen der oben erwähnten Substanzen auf das anorganische oder organische Substrat aufgetragen werden und gegebenenfalls
c) unter Verwendung geeigneter Verfahren die oben erwähnten Substanzen getrocknet und mit elektromagnetischen Wellen bestrahlt werden,
wobei als Photoinitiator mindestens eine Verbindung der Formel (I), (II), (III) und/oder (IV)
IN-L-RG (I)
IN-L-RG₁-L₁-H (II)
IN-L-RG₁-L₁-IN₁ (III)
IN-L-RG₁-L₁-RG₂-L₂-IN₁ (IV),
worin
IN und IN₁ jeweils unabhängig voneinander eine Monoacylphosphin-, Monoacylphosphinoxid- oder Monoacylphosphinsulfid-Photoinitiatorgruppe sind;
L, L₁ und L₂ jeweils unabhängig voneinander eine Einzelbindung oder eine Spacergruppe sind;
RG ein einwertiger Rest mit mindestens einer ethylenisch ungesättigten C=C-Bindung ist; und
RG₁ und RG₂ jeweils unabhängig voneinander ein zweiwertiger Rest mit mindestens einer ethylenisch ungesättigten C=C-Bindung sind;
verwendet wird und entweder
d1) das so mit dem Photoinitiator vorbeschichtete Substrat mit einer Zusammensetzung, umfassend mindestens ein ethylenisch ungesättigtes Monomer oder Oligomer, beschichtet wird und die Beschichtung mittels UV/VIS-Strahlung oder einem Elektronenstrahl bestrahlt wird; oder
d2) das so mit dem Photoinitiator vorbeschichtete Substrat mit einer Druckfarbe beschichtet und getrocknet wird; oder
d3) ein Metall, Halbmetall, Metalloxid oder Halbmetalloxid aus der Gasphase auf dem so mit dem Photoinitiator vorbeschichteten Substrat abgeschieden wird.

2. Verfahren nach Anspruch 1, wobei in den Verbindungen der Formeln (I), (II), (III) und (IV) IN und IN₁ jeweils unabhängig voneinander 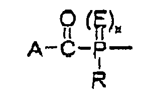 sind, worin
E O oder S ist;
x 0 oder 1 ist;
A 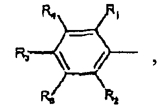 Cyclopentyl, Cyclohexyl, Naphthyl, Biphenylyl, Anthryl oder ein O-, S- oder N-enthaltender 5- oder 6-gliedriger heterocyclischer Ring ist, worin die Reste Cyclopentyl, Cyclohexyl, Naphthyl, Biphenylyl, Anthryl oder der O-, S- oder N-enthaltende 5- oder 6-gliedrige heterocyclische Ring unsubstituiert oder durch Halogen, C₁-C₄-Alkyl oder durch C₁-C₄-Alkoxy substituiert sind;
R₁ und R₂ jeweils unabhängig voneinander C₁-C₂₄-Alkyl, OR₁₁, CF₃ oder Halogen sind;
R₃, R₄ und R₅ jeweils unabhängig voneinander Wasserstoff, C₁-C₂₄-Alkyl, OR₁₁ oder Halogen sind;
oder zwei der Reste R₁, R₂, R₃, R₄ oder R₅ zusammen C₂-C₁₂-Alkylen sind, das nicht unterbrochen oder durch ein oder mehrere O, S oder NR₁₄ unterbrochen ist;
R C₁-C₂₄-Alkyl, unsubstituiert oder durch C₃-C₂₄-Cycloalkyl, C₃-C₂₄-Cycloalkenyl, Phenyl, CN, C(O)R₁₁, C(O)OR₁₁, C(O)N(R₁₄)₂, OC(O)R₁₁, OC(O)OR₁₁, N(R₁₄)C(O)N(R₁₄), OC(O)NR₁₄, N(R₁₄)C(O)OR₁₁, Halogen, OR₁₁, SR₁₁ oder durch N(R₁₂)(R₁₃) substituiert ist, oder R C₂-C₂₄-Alkyl ist, das ein- oder mehrmals durch nicht-aufeinanderfolgende O oder S unterbrochen ist und unsubstituiert oder durch Phenyl, OR₁₁, CN, C(O)R₁₁, C(O)OR₁₁ oder durch C(O)N(R₁₄)₂ substituiert ist;
oder R C₂-C₂₄-Alkenyl ist, das nicht unterbrochen oder ein- oder mehrmals durch nicht-aufeinanderfolgende O unterbrochen und unsubstituiert oder durch OR₁₁ oder durch C₁-C₁₂-Alkyl substituiert ist;
oder R C₅-C₂₄-Cycloalkenyl ist, das nicht unterbrochen oder ein- oder mehrmals durch nicht-aufeinanderfolgende O, S oder NR₁₄ unterbrochen und unsubstituiert oder durch OR₁₁ oder durch C₁-C₁₂-Alkyl substituiert ist;
oder R C₇-C₂₄-Arylalkyl ist, das unsubstituiert oder an dem Arylrest durch C₁-C₁₂-Alkyl oder durch C₁-C₁₂-Alkoxy substituiert ist;
oder R C₄-C₂₄-Cycloalkyl ist, das nicht unterbrochen oder ein- oder mehrmals durch nicht-aufeinanderfolgende O, S oder NR₁₄ unterbrochen und unsubstituiert oder durch OR₁₁ oder durch C₁-C₁₂-Alkyl substituiert ist;
oder R 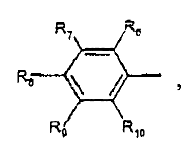 C₈-C₂₄-Arylcycloalkyl oder C₈-C₂₄-Arylcycloalkenyl ist;
R₆, R₇, R₈, R₉ und R₁₀ jeweils unabhängig voneinander Wasserstoff, C₁-C₂₄-Alkyl, unsubstituiert oder durch SR₁₁, N(R₁₂)(R₁₃), OR₁₁ oder durch Phenyl substituiert, sind; oder
R₆, R₇, R₈, R₉ und R₁₀ C₂-C₂₄-Alkyl sind, das ein- oder mehrmals durch nicht-aufeinanderfolgende O unterbrochen und unsubstituiert oder durch SR₁₁, N(R₁₂)(R₁₃), OR₁₁ oder durch Phenyl substituiert ist; oder
R₆, R₇, R₈, R₉ und R₁₀ SR₁₁, N(R₁₂)(R₁₃), OR₁₁, Phenyl oder Halogen sind;
R₁₁ Wasserstoff, C₁-C₂₀-Alkyl, C₂-C₂₀-Alkenyl, C₃-C₈-Cycloalkyl, Benzyl ist; oder R₁₁ C₂-C₂₀-Alkyl, das ein- oder mehrmals durch O unterbrochen ist, oder C₂-C₂₀-Alkenyl, das ein- oder mehrmals durch O unterbrochen ist, ist oder
R₁₁ Phenyl ist, das unsubstituiert oder durch C₁-C₄-Alkyl oder durch C₁-C₄-Alkoxy substituiert ist;
R₁₂ und R₁₃ jeweils unabhängig voneinander Wasserstoff, C₁-C₂₀-Alkyl, C₂-C₂₀-Alkenyl, C₃-C₈-Cycloalkyl oder Benzyl sind; oder R₁₂ und R₁₃ C₂-C₂₀-Alkyl, das ein- oder mehrmals durch O unterbrochen ist, oder C₂-C₂₀-Alkenyl, das ein- oder mehrmals durch O unterbrochen ist, sind; oder R₁₂ und R₁₃ Phenyl sind, das unsubstituiert oder durch C₁-C₄-Alkyl oder durch C₁-C₄-Alkoxy substituiert ist; oder R₁₂ und R₁₃ zusammen mit dem Stickstoffatom, an das sie gebunden sind, einen 5- oder 6-gliedrigen Ring bilden, der nicht unterbrochen oder durch O oder durch NR₁₄ unterbrochen ist;
R₁₄ Wasserstoff, C₁-C₁₂-Alkyl; Phenyl, unsubstituiert oder substituiert durch C₁-C₄-Alkyl oder C₁-C₄-Alkoxy, oder Benzyl, unsubstituiert oder substituiert durch C₁-C₄-Alkyl oder C₁-C₄-Alkoxy, ist oder R₁₄ C₂-C₁₂-Alkyl ist, das ein- oder mehrmals durch O unterbrochen ist;
L ein Rest -Z-[(A₁)ₐ-Y]_{c}-[(A₂)_{b}-X]_{d}- ist, worin
X, Y und Z jeweils unabhängig voneinander eine Einzelbindung, -O-, -S-, -N(R₁₆)-, -(CO)-, -(CO)O-, -(CO)N(R₁₆)-, -O-(CO)-, -N(R₁₆)-(CO)- oder -N(R₁₆)-(CO)O- sind;
A₁ und A₂ jeweils unabhängig voneinander C₁-C₁₂-Alkylen, C₃-C₁₂-Cycloalkylen, Phenylen, Phenylen-C₁-C₄-alkylen oder C₁-C₄-Alkylen-phenylen-C₁-C₄-alkylen sind;
a, b, c und d jeweils unabhängig voneinander eine Zahl von 0 bis 4 sind; und
R₁₆ Wasserstoff, C₁-C₁₂-Alkyl oder Phenyl ist;
RG ein Rest -R_{d}C=CRₑR_{f} ist, worin
RG₁ und RG₂ jeweils unabhängig voneinander -R_{d}C=CRₑ- oder 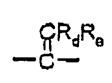 sind; und
R_{d}, Rₑ und R_{f} jeweils unabhängig voneinander Wasserstoff, C₁-C₄-Alkyl, Phenyl, (CO)O-(C₁-C₄-Alkyl) oder C₁-C₄-Alkylphenyl sind.

3. Verfahren nach Anspruch 1, wobei eine Verbindung der Formel (I) verwendet wird.

4. Verfahren nach Anspruch 1, wobei zusätzlich zu den Verbindungen der Formel (I), (II), (III) und/oder (IV) weitere Photoinitiatoren (p) verwendet werden.

5. Verfahren nach Anspruch 4, wobei die weiteren Photoinitiatoren (p) Verbindungen der Formel V, VI, VII,VIII, IX, X oder/und XI sind 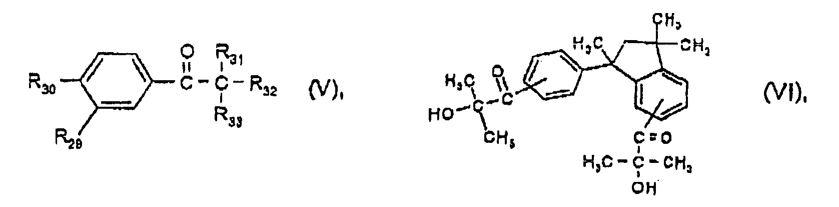 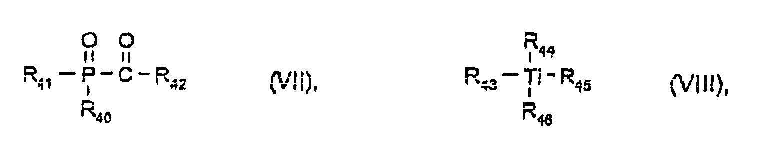 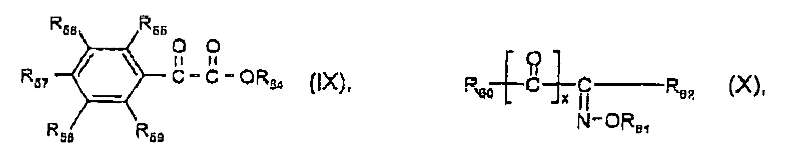 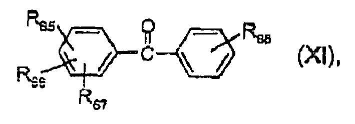 worin
R₂₉ Wasserstoff oder C₁-C₁₈-Alkoxy ist;
R₃₀ Wasserstoff, C₁-C₁₈-Alkyl, C₁-C₁₈-Alkoxy, -OCH₂CH₂-OR₄₇, Morpholino, SCH₃ oder eine Gruppe 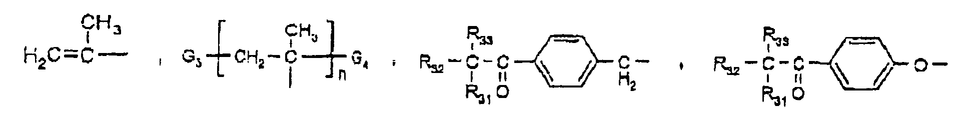 oder 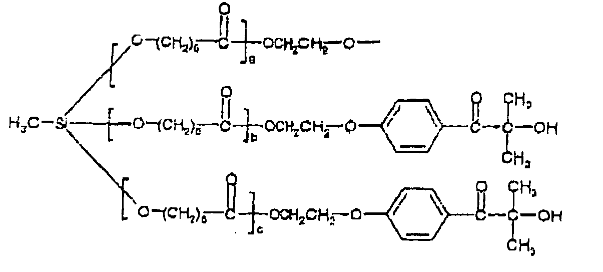 ist;
a, b und c durchschnittlich 3 sind;
n ein Wert von 2 bis 10 ist;
G₃ und G₄ jeweils unabhängig voneinander terminale Gruppen der Polymereinheit, insbesondere Wasserstoff oder CH₃, sind;
R₃₁ Hydroxy, C₁-C₁₆-Alkoxy, Morpholino, Dimethylamino oder -O(CH₂CH₂O)ₘ-C₁-C₁₆-Alkyl ist;
R₃₂ und R₃₃ jeweils unabhängig voneinander Wasserstoff, C₁-C₆-Alkyl, C₁-C₁₆-Alkoxy oder -O(CH₂CH₂O)ₘ-C₁-C₁₆-Alkyl sind; oder R₃₂ und R₃₃ Phenyl oder Benzyl sind, wobei diese Reste unsubstituiert oder durch C₁-C₁₂-Alkyl substituiert sind; oder R₃₂ und R₃₃ zusammen mit dem Kohlenstoffatom, an das sie gebunden sind, einen Cyclohexylring bilden; m eine Zahl von 1 bis 20 ist;
R₃₁, R₃₂ und R₃₃ aber nicht alle gleichzeitig C₁-C₁₆Alkoxy oder -O(CH₂CH₂O)ₘ-C₁-C₁₆Alkyl sind;
R₄₇ Wasserstoff, 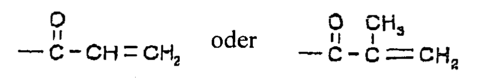 ist;
R₃₄, R₃₆, R₃₇ und R₃₈ jeweils unabhängig voneinander Wasserstoff oder Methyl sind;
R₃₅ und R₃₉ Wasserstoff, Methyl oder Phenylthio, worin der Phenylring des Phenylthiorestes unsubstituiert oder in der/den 4-, 2-, 2,4- oder 2,4,6-Stellung(en) durch C₁-C₄-Alkyl substituiert ist, sind;
R₄₀ und R₄₁ jeweils unabhängig voneinander C₁-C₂₀-Alkyl, Cyclohexyl, Cyclopentyl, Phenyl, Naphthyl oder Biphenylyl sind, wobei diese Reste unsubstituiert oder durch Halogen, C₁-C₁₂-Alkyl, C₁-C₁₂-Alkoxy, C₁-C₁₂-Alkylthio oder durch NR₅₂R₅₃ substituiert sind, oder R₄₀ und R₄₁ ein S- oder N-enthaltender 5- oder 6-gliedriger heterocyclischer Ring oder -(CO)R₄₂ sind;
R₄₂ Cyclohexyl, Cyclopentyl, Phenyl, Naphthyl oder Biphenylyl ist, wobei diese Reste unsubstituiert oder durch Halogen, C₁-C₄-Alkyl oder/und durch C₁-C₄-Alkoxy substituiert sind, oder R₄₂ ein S- oder N-enthaltender 5- oder 6-gliedriger heterocyclischer Ring ist;
R₄₃ und R₄₄ jeweils unabhängig voneinander Cyclopentadienyl, unsubstituiert oder durch C₁-C₁₈-Alkyl, C₁-C₁₈-Alkoxy, Cyclopentyl, Cyclohexyl oder durch Halogen mono-, di- oder tri-substituiert, sind;
R₄₅ und R₄₆ jeweils unabhängig voneinander Phenyl sind, das durch Fluoratome oder CF₃ in mindestens einer der zwei ortho-Positionen zu der Titan-Kohlenstoffbindung substituiert ist und als weitere Substituenten an dem aromatischen Ring Polyoxaalkyl oder Pyrrolinyl, unsubstituiert oder durch ein oder zwei C₁-C₁₂-Alkyl-, Di(C₁-C₁₂-alkyl)aminomethyl-, Morpholinomethyl-, C₂-C₄-Alkenyl-, Methoxymethyl-, Ethoxymethyl-, Trimethylsilyl-, Formyl-, Methoxy- oder Phenylsubstituenten substituiert, enthalten kann;
oder R₄₅ und R₄₆ 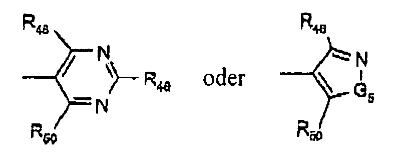 sind;
R₄₈, R₄₉ und R₅₀ jeweils unabhängig voneinander Wasserstoff, Halogen, C₂-C₁₂-Alkenyl, C₁-C₁₂-Alkoxy, C₂-C₁₂-Alkoxy, unterbrochen durch ein bis vier O-Atome, Cyclohexyloxy, Cyclopentyloxy, Phenoxy, Benzyloxy oder Phenyl oder Biphenylyl sind, die jeweils unsubstituiert oder durch C₁-C₄-Alkoxy, Halogen, Phenylthio oder durch C₁-C₄-Alkylthio substituiert sind,
worin R₄₈ und R₅₀ nicht beide gleichzeitig Wasserstoff sind und in dem Rest 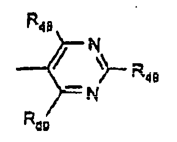 mindestens ein Rest R₄₈ oder R₅₀ C₁-C₁₂-Alkoxy, C₂-C₁₂-Alkoxy, unterbrochen durch ein bis vier O-Atome, Cyclohexyloxy, Cyclopentyloxy, Phenoxy oder Benzyloxy ist;
G₅ O, S oder NR₅₁, ist; und
R₅₁ C₁-C₈-Alkyl, Phenyl oder Cyclohexyl ist;
R₅₂ und R₅₃ jeweils unabhängig voneinander Wasserstoff; C₁-C₁₂-Alkyl, nicht unterbrochen oder durch O-Atome unterbrochen und unsubstituiert oder durch OH oder SH substituiert, sind; oder
R₅₂ und R₅₃ C₂-C₁₂-Alkenyl, Cyclopentyl, Cyclohexyl, Benzyl, Phenyl sind;
R₅₄ Wasserstoff, C₁-C₁₂-Alkyl oder eine Gruppe 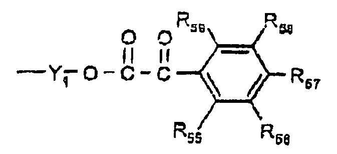 ist;
R₅₅, R₅₆, R₅₇, R₅₈ und R₅₉ jeweils unabhängig voneinander Wasserstoff; C₁-C₁₂-Alkyl, das unsubstituiert oder durch OH, C₁-C₄-Alkoxy, Phenyl, Naphthyl, Halogen oder durch CN substituiert ist und durch ein oder mehrere O-Atome unterbrochen sein kann, sind; oder
R₅₅, R₅₆, R₅₇, R₅₈ und R₅₉ C₁-C₄-Alkoxy, C₁-C₄-Alkylthio oder NR₅₂R₅₃ sind;
Y₁ ein zweiwertiger aliphatischer oder aromatischer Rest, insbesondere C₁-C₁₂-Alkylen, ist; x 0 oder 1 ist;
R₆₀ Phenyl, Naphthyl oder, wenn x 0 ist, 9H-Carbazol-3-yl oder (9-Oxo-9H-thioxanthen-2-yl)- ist, wobei alle diese Reste unsubstituiert oder durch einen oder mehrere SR₆₃-, OR₆₄-, NR₅₂R₅₃-, Halogen-, C₁-C₁₂-Alkyl-, Phenyl-, Benzyl-, -(CO)-C₁-C₄-Alkyl-, -(CO)-Phenyl- oder -(CO)-Phenylen-C₁-C₄-alkyl-Substituenten substituiert sind;
R₆₁ C₄-C₉-Cycloalkanoyl; C₁-C₁₂-Alkanoyl, unsubstituiert oder durch einen oder mehrere Halogen-, Phenyl- oder CN-Substituenten substituiert, ist; oder
R₆₁ C₄-C₆-Alkenoyl ist, mit der Maßgabe, daß die Doppelbindung nicht mit der Carbonylgruppe konjugiert ist; oder
R₆₁ Benzoyl, unsubstituiert oder durch einen oder mehrere C₁-C₆-Alkyl-, Halogen-, CN-, OR₆₄-, SR₆₃- oder NR₅₂R₅₃-Substituenten substituiert, ist; oder
R₆₁ C₂-C₆-Alkoxycarbonyl, Benzyloxycarbonyl oder Phenoxycarbonyl, unsubstituiert oder durch einen oder mehrere C₁-C₆-Alkyl- oder Halogen-Substituenten substituiert, ist;
R₆₂ Wasserstoff, Phenyl oder Benzoyl ist, wobei die Reste Phenyl und Benzoyl unsubstituiert oder durch C₁-C₆-Alkyl, Phenyl, Halogen, OR₆₄, SR₆₃ oder durch NR₅₂R₅₃ substituiert sind; oder
R₆₂ C₁-C₂₀-Alkyl oder C₂-C₁₂-Alkoxycarbonyl ist, wobei die Reste C₁-C₂₀-Alkyl und C₂-C₁₂-Alkoxycarbonyl unsubstituiert oder durch OH substituiert sind und nicht unterbrochen oder durch ein oder mehrere O-Atome unterbrochen sind; oder R₆₂ C₂-C₂₀-Alkanoyl, Benzyl, Benzyl-(CO)-, C₁-C₆-Alkyl-SO₂- oder Phenyl-SO₂- ist;
R₆₃ und R₆₄ jeweils unabhängig voneinander Wasserstoff oder C₁-C₁₂-Alkyl, unsubstituiert oder durch OH, SH, CN, Phenyl, (CO)O-C₁-C₄-Alkyl, O(CO)-C₁-C₄-Alkyl, COOH, O(CO)-Phenyl substituiert, sind und ein solches unsubstituiertes oder substituiertes C₁-C₁₂-Alkyl durch ein oder mehrere O-Atome unterbrochen sein kann; oder R₆₃ und R₆₄ Cyclohexyl oder Phenyl, unsubstituiert oder durch C₁-C₁₂-Alkyl, C₁-C₁₂-Alkoxy oder durch Halogen substituiert, oder Phenyl-C₁-C₃-alkyl sind;
R₆₅, R₆₆ und R₆₇ jeweils unabhängig voneinander Wasserstoff, C₁-C₄-Alkyl, C₁-C₄-Halogenalkyl, C₁-C₄-Alkoxy, Chlor oder N(C₁-C₄-Alkyl)₂ sind;
R₆₈ Wasserstoff, C₁-C₄-Alkyl, C₁-C₄-Halogenalkyl, Phenyl, N(C₁-C₄-Alkyl)₂, COOCH₃, 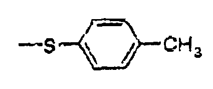 oder 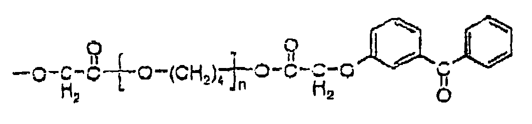 ist; oder R₆₈ und R₆₇ zusammen -S- sind.

6. Verfahren nach einem der vorhergehenden Ansprüche 1 bis 5, worin die Photoinitiatoren der Formel (I), (II), (III) und/oder (IV) oder Gemische davon mit Monomeren oder Oligomeren in Kombination mit einer oder mehreren Flüssigkeiten (wie Lösungsmitteln oder Wasser) in Form von Lösungen, Suspensionen und Emulsionen verwendet werden.

7. Verfahren nach Anspruch 1, wobei in dem Verfahrensschritt d1) eine photopolymerisierbare Zusammensetzung, umfassend mindestens ein ethylenisch ungesättigtes Monomer oder/und Oligomer und mindestens einen Photoinitiator und/oder Coinitiator, auf das vorbehandelte Substrat aufgetragen und mittels UV/VIS-Strahlung gehärtet wird.

8. Verfahren nach Anspruch 1, wobei als Plasmagas ein Inertgas oder ein Gemisch aus einem Inertgas mit einem reaktiven Gas verwendet wird.

9. Verfahren nach Anspruch 8, wobei Luft, H₂, CO₂, He, Ar, Kr, Xe, N₂, O₂ oder H₂O einzeln oder in Form eines Gemisches verwendet werden.

10. Verfahren nach Anspruch 1, wobei die aufgetragene Photoinitiatorschicht eine Schichtdicke von bis zu 500 nm, bevorzugt von einer monomolekularen Schicht bis 200 nm hat.

11. Verfahren nach Anspruch 1, wobei Verfahrensschritt b) unmittelbar nach Verfahrensschritt a) oder innerhalb von 24 Stunden nach Verfahrensschritt a) durchgeführt wird.

12. Verfahren nach Anspruch 1, wobei die Konzentration des Photoinitiators oder der Photoinitiatoren in Verfahrensschritt b) 0,01 bis 99,5 %, bevorzugt 0,1 bis 80 %, beträgt.

13. Verfahren nach Anspruch 1, wobei der Verfahrensschritt c) unmittelbar nach Verfahrensschritt b) oder innerhalb von 24 Stunden nach Verfahrensschritt b) durchgeführt wird.

14. Verfahren nach Anspruch 1, wobei das Trocknen in Verfahrensschritt c) in einem Ofen mit warmem Gas, Heißwalzen oder einem IR- oder Mikrowellenstrahler oder mittels Absorption durchgeführt wird.

15. Verfahren nach Anspruch 1, wobei die Bestrahlung in Verfahrensschritt c) unter Verwendung einer Quelle, die elektromagnetische Wellen mit Wellenlängen im Bereich von 200 nm bis 700 nm emittiert, oder mittels eines Elektronenstrahls durchgeführt wird.

16. Verfahren nach Anspruch 1, wobei Teile der Photoinitiatoren oder Gemische davon mit Monomeren und/oder Oligomeren, aufgetragen in Verfahrensschritt b), die nach der Bestrahlung in Verfahrensschritt c) nicht vernetzt worden sind, durch Behandlung mit einem Lösungsmittel und/oder Wasser und/oder mechanisch entfernt werden.

17. Verfahren nach Anspruch 1, wobei nach der Bestrahlung in Verfahrensschritt d1) Teile der Beschichtung durch Behandlung mit einem Lösungsmittel und/oder Wasser und/oder mechanisch entfernt werden.

18. Stark haftende Beschichtung, erhältlich durch ein Verfahren nach einem der vorhergehenden Ansprüche 1 bis 17.

## Revendications

1. Procédé de production d'un revêtement à forte adhérence sur un substrat inorganique ou organique, dans lequel
a) on effectue un traitement par plasma à basse température, un traitement par décharge Corona ou un traitement à la flamme sur le substrat inorganique ou organique,
b) on applique un ou plusieurs photoamorceurs ou mélanges de photoamorceurs avec des monomères et/ou oligomères, contenant au moins un groupe éthyléniquement insaturé, ou des solutions, des suspensions ou des émulsions des substances mentionnées précédemment, au substrat inorganique ou organique, et éventuellement
c) en utilisant des procédés appropriés, on sèche ces substances mentionnées précédemment et on les irradie avec des ondes électromagnétiques,
en utilisant comme photoamorceur au moins un composé de formules (I), (II), (III) et/ou (IV)
IN-L-RG (I)
IN-L-RG₁-L₁-H (II)
IN-L-RG₁-L₁-IN₁ (III)
IN-L-RG₁-L₁-RG₂-L₂-IN₁ (IV),
dans lesquelles
IN et IN₁ sont chacun indépendamment des autres un groupe de photoamorceurs monoacylphosphine, monoacylphosphine oxyde ou monoacylphosphine sulfure ;
L, L₁ et L₂ sont chacun indépendamment des autres une liaison simple ou un groupe d'espacement ;
RG est un radical monovalent ayant au moins une liaison C=C éthyléniquement insaturée ; et
RG₁ et RG₂ sont chacun indépendamment de l'autre un radical divalent ayant au moins une liaison C=C éthyléniquement insaturée;
et soit
d1) le substrat ainsi prérevêtu avec un photoamorceur est revêtu avec une composition comprenant au moins un monomère ou oligomère éthyléniquement insaturé et le revêtement est durci au moyen de rayonnement UV/VIS ou d'un faisceau d'électrons ; soit d2) le substrat ainsi prérevêtu avec un photoamorceur est revêtu avec une encre d'impression et séché ; soit
d3) on dépose un métal, semi-métal, oxyde de métal ou oxyde de semi-métal en phase gazeuse sur le substrat ainsi prérevêtu avec un photoamorceur.

2. Procédé selon la revendication 1, dans lequel dans les composés de formules (I), (II), (III) et (IV)
IN et IN₁ sont chacun indépendamment de l'autre 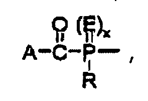 dans laquelle
E est O ou S ;
x est 0 ou 1 ;
A est 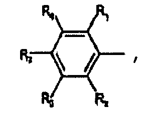
un cyclopentyle, cyclohexyle, naphtyle, biphénylyle, anthryle ou un cycle hététocyclique à 5 ou 6 chaînons contenant O, S ou N, dans lequel les radicaux cyclopentyle, cyclohexyle, naphtyle, biphénylyle, anthryle ou le cycle hétérocyclique à 5 ou 6 chaînons contenant O, S ou N sont non substitués ou substitués par un halogène, alkyle en C₁ à C₄ ou alcoxy en C₁ à C₄ ;
R₁ et R₂ sont chacun indépendamment de l'autre un alkyle en C₁ à C₂₄, OR₁₁, CF₃ ou un halogène;
R₃, R₄ et R₅ sont chacun indépendamment des autres un hydrogène, alkyle en C₁ à C₂₄, OR₁₁ ou un halogène; ou deux des radicaux R₁, R₂, R₃, R₄ ou R₅ ensemble sont un alkylène en C₂ à C₁₂ qui est ininterrompu ou interrompu par un ou plusieurs 0, S ou RN₁₄ ;
R est un alkyle en C₁ à C₂₄ non substitué ou substitué par un cycloalkyle en C₃ à C₂₄, cycloalcényle en C₃ à C₂₄, phényle, CN, C(O)R₁₁, C(O)OR₁₁, C(O)N(R₁₄)₂, OC(O)R₁₁, OC(O)OR₁₁, N(R₁₄)C(O)N(R₁₄), OC(O)NR₁₄, N(R₁₄)C(O)OR₁₁, halogène, OR₁₁, SR₁₁ ou par N(R₁₂)(R₁₃) ; ou R est un alkyle en C₂ à C₂₄ interrompu une ou plusieurs fois par O ou S non consécutif et non substitué ou substitué par un phényle, OR₁₁, CN, C(O)R₁₁, C(O)OR₁₁ ou par C(O)N(R₁₄)₂ ;
ou R est un alcényle en C₂ à C₂₄ ininterrompu ou interrompu une ou plusieurs fois par 0 non consécutif et non substitué ou substitué par OR₁₁ ou par un alkyle en C₁ à C₁₂ ;
ou R est un cycloalcényle en C₅ à C₂₄ ininterrompu ou interrompu une ou plusieurs fois par O, S ou NR₁₄ non consécutif et non substitué ou substitué par OR₁₁ ou par un alkyle en C₁ à C₁₂ ;
ou R est un arylalkyle en C₇ à C₂₄ non substitué ou substitué sur le radical aryle par un alkyle en C₁ à C₁₂ ou par un alcoxy, en C₁ à C₁₂ ;
ou R est un cycloalkyle en C₄ à C₂₄ ininterrompu ou interrompu une ou plusieurs fois par 0, S ou NR₁₄ non consécutif et non substitué ou substitué par OR₁₁ ou par un alkyle en C₁ à C₁₂ ;
ou R est 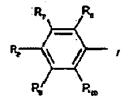 un arylcycloalkyle en C₈ à C₂₄ ou arylcycloalcényle en C₈ à C₂₄ ;
R₆, R₇, R₈, R₉ et R₁₀ sont chacun indépendamment des autres un hydrogène, alkyle en C₁ à C₂₄ non substitué ou substitué par SR₁₁, N(R₁₂) (R₁₃), OR₁₁ ou par un phényle ; ou R₆, R₇, R₈, R₉ et R₁₀ sont un alkyle en C₂ à C₂₄ interrompu une ou plusieurs fois par 0 non consécutif et non substitué ou substitué par SR₁₁, N(R₁₂)(R₁₃), OR₁₁ ou par un phényle ; ou R₆, R₇, R₈, R₉ et R₁₀ sont SR₁₁, N(R₁₂) (R₁₃), OR₁₁, phényle ou halogène ;
R₁₁ est un hydrogène, alkyle en C₁ à C₂₀, alcényle en C₂ à C₂₀, cycloalkyle en C₃ à C₈, benzyle ; ou R₁₁ est un alkyle en C₂ à C₂₀ interrompu une ou plusieurs fois par 0, ou alcényle en C₂ à C₂₀ interrompu une ou plusieurs fois par O ; ou R₁₁ est un phényle non substitué ou substitué par un alkyle en C₁ à C₄ ou par un alcoxy en C₁ à C₄ ;
R₁₂ et R₁₃ sont chacun indépendamment de l'autre un hydrogène, alkyle en C₁ à C₂₀, alcényle en C₂ à C₂₀, cycloalkyle en C₃ à C₈ ou benzyle; ou R₁₂ et R₁₃ sont un alkyle en C₂ à C₂₀ interrompu une ou plusieurs fois par 0, ou alcényle en C₂ à C₂₀ interrompu une ou plusieurs fois par O ; ou R₁₂ et R₁₃ sont un phényle non substitué ou substitué par un alkyle en C₁ à C₄ ou par un alcoxy en C₁ à C₄; ou R₁₂ et R₁₃, ensemble avec l'atome d'azote auquel ils sont liés, forment un cycle à 5 ou 6 chaînons ininterrompu ou interrompu par O ou par NR₁₄ ;
R₁₄ est un hydrogène, alkyle en C₁ à C₁₂ ; phényle non substitué ou substitué par un alkyle en C₁ à C₄ ou par un alcoxy en C₁ à C₄, ou benzyle non substitué ou substitué par un alkyle en C₁ à C₄ ou par un alcoxy en C₁ à C₄, ou R₁₄ est un alkyle en C₂ à C₁₂ interrompu une ou plusieurs fois par O ;
L est un radical -Z-[(A₁)ₐ-Y]_{c}-[(A₂)_{b}-X]_{d}- ;
X, Y et Z sont chacun indépendamment des autres une liaison simple, -O-, -S-, -N(R₁₆)-, -(CO)-, -(CO)O-, -(CO)N(R₁₆)-, -O-(CO)-, -N(R₁₆)-(CO)- ou -N(R₁₆)-(CO)O- ;
A₁ et A₂ sont chacun indépendamment de l'autre un alkylène en C₁ à C₁₂, cycloalkylène en C₃ à C₁₂, phénylène, phénylène-alkylène en C₁ à C₄ ou alkylène en C₁ à C₄-phénylène-alkylène en C₁ à C₄;
a, b, c et d sont chacun indépendamment des autres un nombre de 0 à 4 ; et
R₁₆ est un hydrogène, alkyle en C₁ à C₁₂ ou phényle ;
RG est un radical -R_{d}C=CRₑR_{f} ;
RG₁ et RG₂ sont chacun indépendamment de l'autre -R_{d}C=CRₑ- ou ou 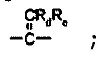 et
R_{d}, Rₑ et R_{f} chacun indépendamment des autres un hydrogène, alkyle en C₁ à C₄, phényle, (CO)O-(alkyle en C₁ à C₄) ou (alkyle en C₁ à C₄)phényle.

3. Procédé selon la revendication 1, dans lequel on utilise un composé de formule (I).

4. Procédé selon la revendication 1, dans lequel on utilise en plus des composés de formules (I), (II), (III) et/ou (IV) on utilise d'autres photoamorceurs (p).

5. Procédé selon la revendication 4, dans lequel les autres photoamorceurs (p) sont des composés de formules V, VI, VII, VIII, IX, X et/ou XI 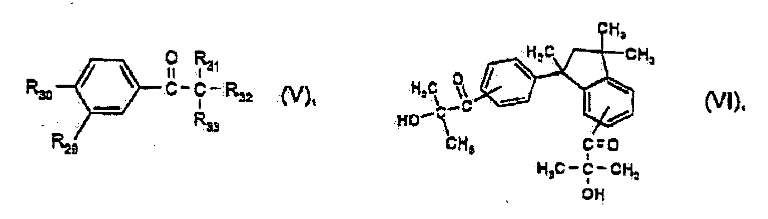 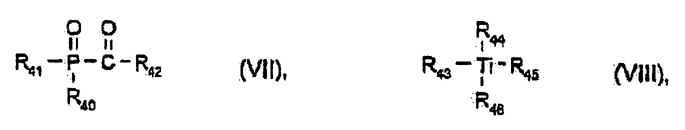 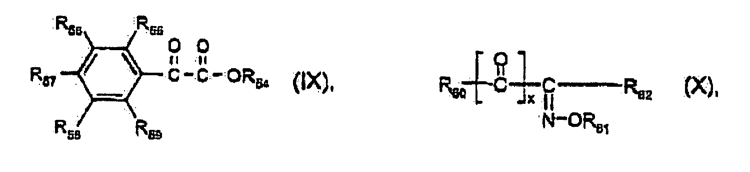 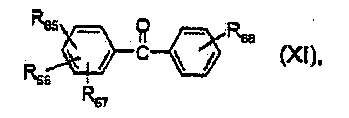 dans lesquelles
R₂₉ est un hydrogène ou alcoxy en C₁ à C₁₆ ;
R₃₀ est un hydrogène, alkyle en C₁ à C₁₈, alcoxy en C₁ à C₁₈, -OCH₂CH₂-OR₄₇, morpholino, SCH₃ ou un groupe 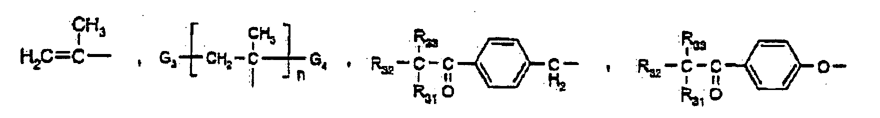 ou 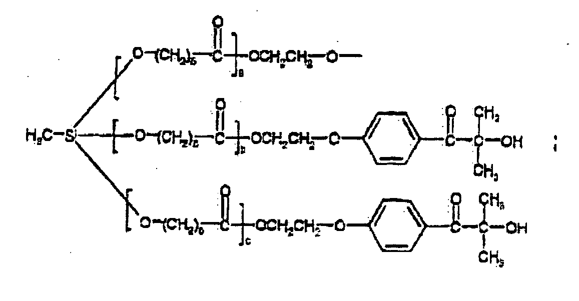
a, b et c ont une moyenne de 3 ;
n a une valeur de 2 à 10 ;
G₃ et G₄ sont chacun indépendamment de l'autre des groupes terminaux du motif polymérique, en particulier un hydrogène ou CH₃ ;
R₃₁ est un hydroxy, alcoxy en C₁ à C₁₆, morpholino, diméthylamino ou -O(CH₂CH₂O)ₘ-alkyle en C₁ à C₁₆ ;
R₃₂ et R₃₃ sont chacun indépendamment de l'autre un hydrogène, alkyle en C₁ à C₆, alcoxy en C₁ à C₁₆ ou -O(CH₂CH₂O)ₘ-alkyle en C₁ à C₁₆ ; ou R₃₂ et R₃₃ sont un phényle ou benzyle, ces radicaux étant non substitués ou substitués par un alkyle en C₁ à C₁₂ ; ou R₃₂ et R₃₃, ensemble avec l'atome de carbone auquel ils sont liés, forment un cycle cyclohexyle ;
m est nombre de 1 à 20 ;
mais R₃₁, R₃₂ et R₃₃ ne sont pas simultanément un alcoxy en C₁ à C₁₆ ou -O(CH₂CH₂O)ₘ-alkyle en C₁ à C₁₆ ;
R₄₇ est un hydrogène, 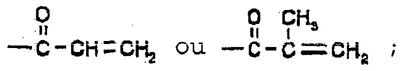
R₃₄, R₃₆, R₃₇ et R₃₈ sont chacun indépendamment des autres un hydrogène ou méthyle ;
R₃₅ et R₃₉ sont un hydrogène, méthyle ou phénylthio, dans lequel le cycle phényle du radical phénylthio est non substitué ou substitué en position(s) 4, 2, 2,4 ou 2,4,6 par un alkyle en C₁ à C₄ ;
R₄₀ et R₄₁ sont chacun indépendamment de l'autre un alkyle en C₁ à C₂₀, cyclohexyle, cyclopentyle, phényle, naphtyle ou biphénylyle, ces radicaux étant non substitués ou substitués par un halogène, alkyle en C₁ à C₁₂, alcoxy en C₁ à C₁₂, alkylthio en C₁ à C₁₂ ou par NR₅₂R₅₃, ou R₄₀ et R₄₁ sont un cycle hétérocyclique à 5 ou 6 chaînons contenant S ou N ou -(CO)R₄₂;
R₄₂ est un cyclohexyle, cyclopentyle, phényle, naphtyle ou biphénylyle, ces radicaux étant non substitués ou substitués par un halogène, alkyle en C₁ à C₄ et/ou par un alcoxy en C₁ à C₄, ou R₄₂ est un cycle hétérocyclique à 5 ou 6 chaînons contenant S ou N ;
R₄₃ et R₄₄ sont chacun indépendamment de l' autre un cyclopentadiényle non substitué ou mono-, di- ou trisubstitué par un alkyle en C₁ à C₁₈, alcoxy en C₁ à C₁₈, cyclopentyle, cyclohexyle ou par un halogène ;
R₄₅ et R₄₆ sont chacun indépendamment de l'autre un phényle qui est substitué par des atomes de fluor ou CF₃ dans au moins une des deux positions ortho par rapport à la liaison titane-carbone et peut contenir, comme autres substituants sur le cycle aromatique, un polyoxaalkyle ou pyrrolinyle non substitué ou substitué par un ou deux substituants alkyle en C₁ à C₁₂, di(alkyle en C₁ à C₁₂)aminométhyle, morpholinométhyle, alcényle en C₂ à C₄, méthoxyméthyle, éthoxyméthyle, triméthylsilyle, formyle, méthoxy ou phényle,
ou R₄₅ et R₄₆ sont 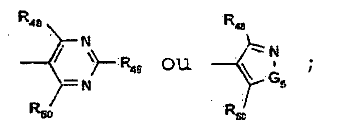
R₄₈, R₄₉ et R₅₀ sont chacun indépendamment des autres un hydrogène, halogène, alcényle en C₂ à C₁₂, alcoxy en C₁ à C₁₂, alcoxy en C₂ à C₁₂ interrompu par un à quatre atomes O, cyclohexyloxy, cyclopentyloxy, phénoxy, benzyloxy, ou phényle ou biphénylyle chacun non substitué ou substitué par un alcoxy en C₁ à C₄, halogène, phénylthio ou par un alkylthio en C₁ à C₄,
R₄₈ et R₅₀ n'étant pas tous deux simultanément un hydrogène et dans le radical 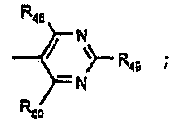
au moins un radical R₄₈ ou R₅₀ est un alcoxy en C₁ à C₁₂, alcoxy en C₂ à C₁₂ interrompu par un à quatre atomes 0, cyclohexyloxy, cyclopentyloxy, phénoxy ou benzyloxy ;
G₅ est 0, S ou NR₅₁ ; et
R₅₁ est un alkyle en C₁ à C₈, phényle ou cyclohexyle ;
R₅₂ et R₅₃ sont chacun indépendamment de l' autre un hydrogène ; alkyle en C₁ à C₁₂ ininterrompu ou interrompu par des atomes O et non substitué ou substitué par OH ou par SH ; ou R₅₂ et R₅₃ sont un alcényle en C₂ à C₁₂, cyclopentyle, cyclohexyle, benzyle, phényle ;
R₅₄ est un hydrogène, alkyle en C₁ à C₁₂ ou un groupe 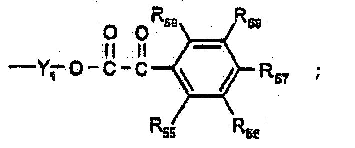
R₅₅, R₅₆, R₅₇, R₅₈ et R₅₉ sont chacun indépendamment des autres un hydrogène ; alkyle en C₁ à C₁₂ qui est non substitué ou substitué par OH, un alcoxy en C₁ à C₄, phényle, naphtyle, halogène ou par CN et peuvent être interrompus par un ou plusieurs des atomes O ; ou R₅₅, R₅₆, R₅₇, R₅₈ et R₅₉ sont un alcoxy en C₁ à C₄, alkythio en C₁ à C₄ ou NR₅₂R₅₃ ;
Y₁ est un radical aliphatique ou aromatique divalent, en particulier un alkylène en C₁ à C₁₂,
x est 0 ou 1 ;
R₆₀ est un phényle, naphtyle, ou, lorsque x est 0, 9H-carbazol-3-yle, ou (9-oxo-9H-thioxanthén-2-yle), tous ces radicaux étant non substitués ou substitués par un ou plusieurs substituants SR₆₃, OR₆₄, NR₅₂R₅₃, halogène, alkyle en C₁ à C₁₂, phényle, benzyle, -(CO)-alkyle en C₁ à C₄, - (CO) -phényle ou - (CO) -phénylènealkyle en C₁ à C₄ ;
R₆₁ est un cycloalcanoyle en C₄ à C₉; alcanoyle en C₁ à C₁₂ non substitué ou substitué par un ou plusieurs substituants halogène, phényle ou CN ; ou R₆₁ est un alcénoyle en C₄ à C₆, à condition que la double liaison ne soit pas conjuguée avec le groupe carbonyle ; ou R₆₁ est un benzoyle non substitué ou substitué par un ou plusieurs substituants alkyle en C₁ à C₆, halogène, CN, OR₆₄, SR₆₃ ou NR₅₂R₅₃ ; ou R₆₁ est un alcoxycarbonyle en C₂ à C₆, benzyloxycarbonyle ; ou phénoxycarbonyle non substitué ou substitué par un ou plusieurs substituants alkyle en C₁ à C₆ ou halogène ;
R₆₂ est un hydrogène, phényle ou benzoyle, les radicaux phényle et benzoyle étant non substitués ou substitués par un alkyle en C₁ à C₆, phényle, halogène, OR₆₄, RS₆₃ ou par NR₅₂R₅₃; ou R₆₂ est un alkyle en C₁ à C₂₀ ou alcoxycarbonyle en C₂ à C₁₂, les radicaux alkyle en C₁ à C₂₀ et alcoxycarbonyle en C₂ à C₁₂ étant non substitués ou substitués par OH et ininterrompus ou interrompus par un ou plusieurs atomes O ; ou R₆₂ est un alcanoyle en C₂ à C₂₀, benzyle, benzyl-(CO)-, alkyle en C₁ à C₆-SO₂ ou phényl-SO₂- ;
R₆₃ et R₆₄ sont chacun indépendamment de l'autre un hydrogène ou alkyle en C₁ à C₁₂ non substitué ou substitué par OH, SH, CN, phényle, (CO)O-alkyle en C₁ à C₄, O (CO)-alkyle en C₁ à C₄, COOH, O(CO)-phényle, et un tel alkyle en C₁ à C₁₂ non substitué ou substitué peut être interrompu par un ou plusieurs atomes O ; ou R₆₃ et R₆₄ sont un cyclohexyle, ou phényle non substitué ou substitué par un alkyle en C₁ à C₁₂, alcoxy en C₁ à C₁₂ ou par un halogène, ou phénylalkyle en C₁ à C₃;
R₆₅, R₆₆ et R₆₇ sont chacun indépendamment des autres un hydrogène, alkyle en C₁ à C₄, halogénoalkyle en C₁ à C₄, alcoxy en C₁ à C₄, chlore ou N(alkyle en C₁ à C₄)₂;
R₆₈ est un hydrogène, alkyle en C₁ à C₄, halogénoalkyle en C₁ à C₄, phényle, N(alkyle en C₁ à C₄) ₂, COOCH₃, 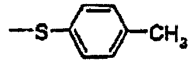 ou 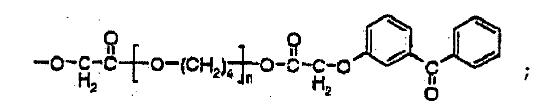 ou R₆₈ et R₆₇ ensemble sont -S-.

6. Procédé selon l'une quelconque des revendications précédentes 1 à 5, dans lequel les photoamorceurs de formules (I), (II), (III) et/ou (IV) ou des mélanges de ceux-ci avec des monomères ou des oligomères sont utilisés en combinaison avec un ou plusieurs liquides (tels que des solvants ou de l'eau) sous la forme de solutions, suspensions et émulsions.

7. Procédé selon la revendication 1, dans lequel dans l'étape de procédé d1), on applique une composition photopolymérisable, comprenant au moins un monomère et/ou oligomère éthyléniquement insaturé et au moins un photoamorceur et/ou co-amorceur, au substrat prétraité et on la durcit au moyen de rayonnement UV/VIS.

8. Procédé selon la revendication 1, dans lequel on utilise comme gaz de plasma un gaz inerte ou un mélange d'un gaz inerte avec un gaz réactif.

9. Procédé selon la revendication 8, dans lequel on utilise, l'air, H₂, CO₂, He, Ar, Kr, Xe, N₂, O₂ ou H₂O seul ou sous la forme d'un mélange.

10. Procédé selon la revendication 1,- dans lequel la couche de photoamorceur appliquée a une épaisseur de couche de jusqu'à 500 nm, de préférence d'une couche monomoléculaire jusqu'à 200 nm.

11. Procédé selon la revendication 1, dans lequel on effectue l'étape de procédé b) immédiatement après l'étape de procédé a) ou dans les 24 heures après l'étape de procédé a).

12. Procédé selon la revendication 1, dans lequel la concentration du photoamorceur ou des photoamorceurs à l'étape de procédé b) est de 0,01 à 99,5 %, de préférence de 0,1 à 80 %.

13. Procédé selon la revendication 1, dans lequel on effectue l'étape de procédé c) immédiatement après l'étape de procédé b) ou dans les 24 heures après l'étape de procédé b).

14. Procédé selon la revendication 1, dans lequel on effectue le séchage dans l'étape de procédé c) dans une étuve, avec du gaz chaud, des rouleaux chauffés ou un radiateur IR ou à micro-onde ou par absorption.

15. Procédé selon la revendication 1, dans lequel on effectue l'irradiation dans l'étape de procédé c) en utilisant une source qui émet des ondes électromagnétiques ayant des longueurs d'onde dans la gamme de 200 nm à 700 nm ou au moyen d'un faisceau d'électrons.

16. Procédé selon la revendication 1, dans lequel on retire des portions des photoamorceurs, ou de mélanges d'entre eux avec des monomères et/ou des oligomères, appliqués à l'étape de procédé b) qui n'ont pas été réticulés après irradiation dans l'étape de procédé c) par traitement avec un solvant et/ou l'eau et/ou mécaniquement.

17. Procédé selon la revendication 1, dans lequel après irradiation à l'étape de procédé d1) on retire des portions du revêtement par traitement avec un solvant et/ou de l'eau et/ou mécaniquement.

18. Revêtement à forte adhérence pouvant être obtenu par un procédé selon l'une quelconque des revendications précédentes 1 à 17.
